# EUROPÄISCHE PATENTSCHRIFT

(11) **EP 2 796 851 B1**
(45) Veröffentlichungstag und Bekanntmachung des Hinweises auf die Patenterteilung: **05.07.2017**
(21) Anmeldenummer: 14165908.6
(22) Anmeldetag: 24.04.2014
(51) Int. Cl.: G01N 3/58, E21C 39/00, E21D 9/11

(54) **Vorrichtung und Verfahren für Modellschneidversuch**
Device and method for model cutting trials
Dispositif et procédé pour essai type de découpe

(30) Priorität: 24.04.2013 AT 502822013
(43) Veröffentlichungstag der Anmeldung: 29.10.2014
(73) Patentinhaber: Montanuniversität Leoben, 8700 Leoben (AT)
(72) Erfinder: Entacher, Martin, 1020 Wien (AT); Galler, Robert, 8600 Bruck/Mur (AT)
(74) Vertreter: Dilg, Haeusler, Schindelmann Patentanwaltsgesellschaft mbH

(56) Entgegenhaltungen:
- CN-A- 101 446 537
- CN-A- 102 841 030
- Saffet Yagiz: "A model for the prediction of tunnel boring machine performance", IAEG2006, 1. Januar 2006 (2006-01-01), Seiten 1-10, XP055136900, Gefunden im Internet: URL:http://www.iaeg.info/iaeg2006/PAPERS/I AEG_383.PDF [gefunden am 2014-08-27]

## Beschreibung

Die Erfindung betrifft eine Modellschneidanordnung, ein Verfahren zum Durchführen von Schneidversuchen an einem Gesteinsprobekörper mittels einer insbesondere hydraulischen Presse zum Ermitteln von Modelldaten zum Modellieren des Vorgangs des Abbaus von Gebirge mittels einer Realschneidrolle an einem Bohrkopf einer Tunnelbohrmaschine, und eine Modellieranordnung.

Eine Tunnelbohrmaschine ist eine Maschine, die zum Bau von Tunnels eingesetzt wird. Bauteile einer Tunnelbohrmaschine sind ein Abbauschild mit Vorschub- und Verspanneinrichtungen, Einrichtungen für den Einbau von Stütz- und Ausbaumaßnahmen, Einrichtungen zum Materialabtransport, eine Versorgungseinheit (Strom, Druckluft, Bewetterung, Wasser), und Transporteinrichtungen für Ausbruchsmaterial, Stützmittel und Ausbaumaterialien. Ein frontseitiger Bohrkopf einer Tunnelbohrmaschine ist mit Abbauwerkzeugen zum Lösen eines Gebirges versehen.

Die Verwendung von Tunnelbohrmaschinen ist eines der häufigsten Bauverfahren zum Bau langer Tunnels im Hartgestein. Zur Ermittlung der Nettovortriebsleistung dieser Maschinen werden sogenannte Penetrationsprognosemodelle verwendet, welche die Bohrbarkeit des Gebirges prognostizieren sollen. Die gängigsten Modelle (zum Beispiel Prognosemodell der Colorado School of Mines) verwenden als Eingangsparameter die einachsiale Druck- und Spaltzugfestigkeit des zu bohrenden Gesteins. Es ist bekannt, dass die Ergebnisse dieser Modelle oftmals weit von der Realität entfernt sind, im Rahmen der Forschungstätigkeit an der Montanuniversität Leoben konnte das zum Beispiel anhand zweier ostalpiner Gesteinsarten nachgewiesen werden.

Neben der Verwendung von geotechnischen Standardversuchen (einachsialer Druck- und Spaltzugversuch) gibt es die Möglichkeit, die Nettovortriebsleistung einer Tunnelbohrmaschine anhand von großmaßstäblichen Schneidversuchen zu prognostizieren. Der erste Prüfstand dieser Art wurde an der Colorado School of Mines in den 70er Jahren gebaut, zwischenzeitlich gibt es ca. zehn Großschneidversuchsstände weltweit. Die Schneidbarkeitsprognose anhand von Großschneidversuchen wird allgemein als zuverlässige Methode der Penetrationsprognose angesehen. Das Problem ist, dass die Versuche teuer und zeitaufwändig sind und Gesteinsblöcke in einer Größe benötigt, wie sie in der Erkundungsphase des Tunnels nicht vorliegen. Für eine echte frühzeitige Prognose ist der Versuch somit nicht wirklich geeignet. Die CN 101 446 537 A offenbart eine Modellschneidanordnung zum Durchführen von Schneidversuchen an einem Gesteinsprobekörper mittels einer hydraulischen Presse, wobei der Gesteinsprobekörper mittels der montierten Modellschneidrolle geschnitten wird. In Saffet Yagiz: "A model for the prediction of tunnel boring machine performance",IAEG 2006, January 2006, pp, 1-10 wird eine Prognose des Vortriebs einer Tunnelbohrmaschine beim Abbau von Gebirge offenbart. Die Modelldaten basieren auf geometrischen Eigenschaften der Modellschneidrolle und der Realschneidrolle. Damit wird der Betrieb der Tunnelbohrmaschine beim Abbau von Gebirge genauer prognostiziert. Der Messstand benutzt mehrere gemessenen Parameter, das Prognosemodell ist jedoch sehr komplex. Weitere herkömmliche Schneidanordnungen zum Messen von Abbaueigenschaften eines Abbauwerkzeuges im Gestein sind in US 5,670,711 CN 102 841 030 oder in Bilgin, N., Balci, C., Tumac D., Feridunoglu, C., Copur, H., 2010, "Development of a Portable Rock Cutting Rig for Rock Cuttability Determination", Proc. European Rock Mechanics Symposium (EUROCK 2010), Lausanne, Schweiz, 15.-18. Juni 2010, pp. 405-408 offenbart. Allerdings sind diese Messstände aufwändig und erlauben nicht in jedem Fall die präzise Erfassung realistischer Parameter.

Es ist eine Aufgabe der vorliegenden Erfindung, Modellschneidversuche an Gesteinsproben mit geringem Aufwand und hoher Präzision durchzuführen.

Diese Aufgabe wird durch die Gegenstände mit den Merkmalen gemäß den unabhängigen Ansprüchen gelöst. Weitere Ausführungsbeispiele sind in den abhängigen Ansprüchen gezeigt.

Gemäß einem Ausführungsbeispiel der vorliegenden Erfindung ist eine Modellieranordnung zum Ermitteln von Modelldaten zum Modellieren des Vorgangs des Abbaus von Gebirge mittels einer Realschneidrolle an einem Bohrkopf einer Tunnelbohrmaschine bereitgestellt, wobei die Modellieranordnung aufweist: eine Modellschneidanordnung zum Durchführen von Schneidversuchen an einem Gesteinsprobekörper (insbesondere zum Ermitteln von Modelldaten zum Modellieren des Vorgangs des Abbaus von Gebirge mittels einer Realschneidrolle - das heißt eine real an einer Tunnelbohrmaschine als Abbauwerkzeug verwendbare Schneidrolle - an einem Bohrkopf einer Tunnelbohrmaschine), wobei die Modellschneidanordnung eine insbesondere hydraulische Presse, die eine Montageplattform und einen Kraftmesskopf aufweist, die relativ zueinander bewegbar sind, und eine Modellschneidrolle aufweist, die (insbesondere einen ähnlichen oder identischen Aufbau wie eine Realschneidrolle, aber gegenüber der Realschneidrolle eine verringerte Dimension aufweist, somit als Modell für die Realschneidrolle in kleinerem Maßstab dient und die) zum Schneiden des Gesteinsprobekörpers ausgebildet ist, wobei die Montageplattform mit einem Aufnahmevolumen zum (insbesondere großflächig kontaktbehafteten und) immobilisierten Aufnehmen des Gesteinsprobekörpers derart ausgebildet ist, dass der Gesteinsprobekörper entlang seiner gesamten Vertikalerstreckung passgenau in das Aufnahmevolumen der Montageplattform kontaktbehaftet eingepasst ist, und wobei der Kraftmesskopf zum Montieren der Modellschneidrolle und ferner derart ausgebildet ist, dass bei Schneiden des Gesteinsprobekörpers mittels der montierten Modellschneidrolle ein für die Schneidkraft indikativer Parameter erfassbar ist. Die Modellieranordnung weist weiter einen Prozessor auf, der ausgebildet ist, basierend auf einem oder mehreren mittels der Modellschneidanordnung erfassten/m, für die Schneidkraft indikativen Parameter(n) sowie basierend auf geometrischen Eigenschaften der Modellschneidrolle und der Realschneidrolle die Modelldaten zu ermitteln.

Gemäß einem anderen Ausführungsbeispiel der vorliegenden Erfindung ist ein Verfahren zum Durchführen von Schneidversuchen an einem Gesteinsprobekörper mittels einer insbesondere hydraulischen Presse zum Ermitteln von Modelldaten zum Modellieren des Vorgangs des Abbaus von Gebirge mittels einer Realschneidrolle an einem Bohrkopf einer Tunnelbohrmaschine geschaffen, wobei bei dem Verfahren eine Modellschneidrolle, die gegenüber der Realschneidrolle eine verringerte Dimension aufweist und die zum Schneiden des Gesteinsprobekörpers ausgebildet ist, an einem Kraftmesskopf der insbesondere hydraulischen Presse montiert wird, der Gesteinsprobekörper in einem Aufnahmevolumen einer Montageplattform der insbesondere hydraulischen Presse (insbesondere seitlich großflächig kontaktbehaftet und) immobilisiert derart aufgenommen wird, dass der Gesteinsprobekörper entlang seiner gesamten Vertikalerstreckung passgenau in das Aufnahmevolumen der Montageplattform kontaktbehaftet eingepasst ist, die Montageplattform und der Kraftmesskopf relativ zueinander bewegt werden, so dass der Gesteinsprobekörper mittels der montierten Modellschneidrolle geschnitten wird, ein für die Schneidkraft indikativer Parameter mittels des Messkopfs beim Schneiden des Gesteinsprobekörpers mittels der montierten Modellschneidrolle gemessen wird, und die Modelldaten basierend auf dem gemessenen Parameter sowie basierend auf geometrischen Eigenschaften der Modellschneidrolle und der Realschneidrolle (gegebenenfalls unter zusätzlicher Berücksichtigung von Eigenschaften des Gebirges bzw. des Gesteinsprobekörpers, der aus dem Gebirge gewonnen sein kann) ermittelt werden.

Gemäß einem exemplarischen Ausführungsbeispiel der Erfindung wird im kleinen Maßstab und somit anhand eines Modells ein Schneidversuch durchgeführt, der zum Beispiel rechnerisch bzw. empirisch auf den großen Maßstab und somit die Verhältnisse einer Tunnelbohrmaschine transferiert werden kann. Dadurch ist eine einfache Messapparatur bereitgestellt, mit der wichtige Informationen für den Tunnelbau (zum Beispiel ein mit einer Tunnelbohrmaschine erreichbarer Vortrieb in zu dem Gesteinsprobekörper ähnlichem Gebirge) und für die mechanische Charakterisierung von Gestein (insbesondere dessen Verhalten bei Schneiden mit einer Schneidrolle eines Abbauwerkzeugs) gewonnen werden können. Durch das Einspannen bzw. Einpassen des Gesteinsprobekörpers über seine gesamte Höhe hinweg in die Montageplattform derart, dass die zu schneidende Gesteinsoberfläche mit einer angrenzenden Oberfläche der Montageplattform bündig bzw. stetig, das heißt ohne Stufen oder sonstige Unstetigkeiten, abschließt, wird eine mechanisch kontinuierliche Struktur vermessen, mit der bei der Messung auftretende Randeffekte des kleindimensionierten Gesteinsprobekörpers weitgehend eliminiert werden können und somit die mechanischen Eigenschaften und Bedingungen eines im Wesentlichen unendlich ausgedehnten Gebirges realitätsnah simuliert werden können.

Somit wird erfindungsgemäß ein Messstand bereitgestellt, der insbesondere für die Penetrationsprognose einer Tunnelbohrmaschine oder für andere bohrtechnische Zwecke herkömmlichen geotechnischen Standardversuchen (einachsialer Druck und Spaltzugversuch) deutlich überlegen ist, allerdings wesentlich günstiger und praktikabler als ein Großschneidversuch ist. Hiermit ist es insbesondere möglich, Probekörper zu verwenden, die bereits in der Erkundungsphase von Großprojekten zur Verfügung stehen. Die erfindungsgemäße Lösung ermöglicht die Durchführung eines Modellschneidversuches, der in einer herkömmlichen (zum Beispiel hydraulischen) Presse aufgebaut werden kann. Im Gegensatz zur vorliegenden Erfindung sind herkömmliche Prüfstände nicht modular in eine solche insbesondere hydraulische Presse integrierbar, sondern eigene Versuchsstände. Exemplarische Ausführungsbeispiele der Erfindung erlauben es, Schneidversuche im kleinen Maßstab an einem einfachen Modellschneidprüfstand auszuführen, welcher als Aufsatz für eine zum Beispiel hydraulische Standard-Presse konzipiert ist. Dies ermöglicht dann zum Beispiel das Ermitteln von für den Vortrieb einer Tunnelbohrmaschine indikativer Information mittels der durchgeführten Modellschneidmessung.

Randbedingungen, welche exemplarische Ausführungsbeispiele der Erfindung erfüllen, sind:
- Der Versuch ist hinsichtlich Probenbeschaffung, Probenvorbereitung, Durchführung und Auswertung einfach und praxistauglich.
- Der Versuch ist sowohl am ungeschädigten, als auch am bereits vorgeschädigten Material (Zustand an der Tunnelortsbrust) durchführbar, und die Tiefe der Penetration ist hierfür überaus genau einstellbar.
- Verschiedene Penetrationstiefen und Schneidspurabstände (das heißt Abstände zwischen Schnitten an demselben Gesteinsprobekörper) sind konzeptionell möglich.

Durch die Montanuniversität Leoben wurden acht Gesteinsarten mit erfindungsgemäßen Apparaturen untersucht, wobei bei drei davon Vergleichswerte aus großmaßstäblichen Schneidversuchen vorliegen. Es konnte gezeigt werden, dass die Ergebnisse des Modellschneidversuches mit den Großschneidversuchen gut, vor allem aber auch besser als andere geotechnische Kennwerte, korrelieren.

Im Weiteren werden zusätzliche exemplarische Ausführungsbeispiele der Modellschneidanordnung, der Modellieranordnung und des Verfahrens beschrieben.

Die Presse ist vorzugsweise eine hydraulische Presse. Unter einer hydraulischen Presse wird im Rahmen dieser Anmeldung insbesondere eine Presse verstanden, die aus einer Saug- und Druckpumpe aufgebaut ist, die Druck ausübt, und einem Kolben, der den Druck empfängt, um ihn auf den zu pressenden Körper zu übertragen. Durch einen Hebel wird der Pumpenkolben gehoben und die Flüssigkeit (insbesondere des Hydrauliköls) des Behälters gelangt unter den Kolben. Der Einsatz einer hydraulischen Presse wird erfindungsgemäß insbesondere deswegen bevorzugt, da diese standardisiert mit geringen Kosten zur Verfügung steht und in vielen Labors verfügbar ist und gleichzeitig äußerst zuverlässig die großen Kräfte aufbringen kann, die für einen Modellschneidversuch erforderlich sind.

Gemäß einem Ausführungsbeispiel kann die als hydraulische Presse ausgebildete Presse ausgebildet sein, dass der Kraftmesskopf gegenüber einem Laborsystem in vertikaler Richtung insbesondere mittels eines Hydraulikzylinders der hydraulischen Presse bewegbar ist und die Montageplattform gegenüber dem Laborsystem in vertikaler Richtung ortsfest ist. Zum Beispiel kann ein Hydraulikzylinder den Kraftmesskopf nach unten bewegen und dadurch die Modellschneidrolle dem Gesteinsprobenkörper in der Montageplattform annähern. Während des Schneidens des Gesteinsprobenkörpers kann die Modellschneidrolle entlang einer vertikalen Oberfläche des Gesteinsprobenkörpers an dem Gesteinsprobenkörper abfahren. Gemäß einem alternativen Ausführungsbeispiel ist es auch möglich, die Montageplattform gegenüber dem Laborsystem in vertikaler Richtung, insbesondere mittels des Hydraulikzylinders, zu bewegen und den Kraftmesskopf gegenüber dem Laborsystem in vertikaler Richtung ortsfest zu halten. Schließlich ist es auch möglich, während des Modellschneidversuchs die Montageplattform und den Kraftmesskopf aufeinander zu zu bewegen.

Gemäß einem Ausführungsbeispiel kann die insbesondere hydraulische Presse ausgebildet sein, dass der Kraftmesskopf in der horizontalen Ebene bei Einwirkung einer seitlichen Belastung zu einer Ausgleichsbewegung fähig ist. Aufgrund der Kopplung zwischen Kraftmesskopf und der samt Halterung montierten Modellschneiddiske führt eine in der horizontalen Ebene ermöglichte freie Bewegung des Kraftmesskopfs dazu, dass ausschließlich Vertikalkräfte aufgebracht werden. Dadurch kann die Messung der vertikalen Anpresskraft der Modelldiske auf den Gesteinsprobekörper von Artefakten freigehalten werden, die aus Störungen oder Kräften in der horizontalen Ebene resultieren. Anders ausgedrückt ermöglicht dies, dass nur in vertikaler Richtung auf die Modellschneidrolle einwirkende Rollkräfte ("rolling force") in dem Kraftmesskopf detektiert werden. Diese Maßnahme kombiniert eine konstruktiv einfache Ausgestaltung mit einer hochpräzisen und fehlerrobusten Messung.

Gemäß einem Ausführungsbeispiel kann der Kraftmesskopf ausgebildet sein, eine ausschließlich uniaxiale Kraftmessung, insbesondere ausschließlich in vertikaler Richtung, zu ermöglichen. Somit kann eine einzige, in den Kraftmesskopf integrierte einachsige Kraftmesszelle ausreichend sein, die gewünschte Wechselwirkungscharakteristik zwischen der Modellschneidrolle und dem Gesteinsprobekörper zu erfassen. Eine Erfassrichtung dieser einzigen Kraftmesszelle kann mit der vertikalen Richtung zusammenfallen. Somit kann eine einzige uniaxiale Kraftmesszelle ausreichend sein, die ausschließlich die Rollkraft der Modellschneidrolle misst.

Gemäß einem Ausführungsbeispiel kann der Kraftmesskopf ausgebildet sein, ausschließlich eine auf die rotierfähig gelagerte Modellschneidrolle einwirkende Rollkraft zu messen. Die Kenntnis der Rollkraft einer Modellschneidrolle allein erlaubt einen aufschlussreichen Rückschluss auf die Verhältnisse beim Schneiden von Gebirge mit einer Realschneidrolle einer Tunnelbohrmaschine. Somit kann schnell und zuverlässig eine Prognose über die realen Verhältnisse in einer Tunnelbohrmaschine erstellt werden, ohne dass eine Messung im großen Maßstab erforderlich ist.

Gemäß einem Ausführungsbeispiel kann die Modellschneidrolle in einem Lagergehäuse an dem Kraftmesskopf rotierfähig gelagert sein und eine umlaufende Schneidkante zum Schneiden des Gesteinsprobekörpers aufweisen. Zwar ist die Modellschneidrolle von einem motorischen Antrieb frei, der diese in Rotation versetzen würde, stattdessen ist die Modellschneidrolle aber wie eine Realschneidrolle aufgrund der Kräfte beim Schneiden von Gebirge bzw. dem Gesteinsprobekörper in Rotation versetzbar. Die vollumfängliche kreisförmige Schneidkante kann dann an verschiedenen Stellen auf das zu schneidende Gestein einwirken. Auf diese Weise ist mit der Modellschneidrolle eine realistische Simulation der Verhältnisse möglich, wie diese auch bei einer Realschneidrolle einer Tunnelbohrmaschine herrschen. Die Montage der Modellschneidrolle in dem Lagergehäuse kann zum Beispiel mittels eines Kugellagers und/oder eines Nadellagers und/oder eines (Kegel)rollenlagers erfolgen.

Gemäß einem Ausführungsbeispiel können die Modellschneidrolle und das Lagergehäuse eine von dem Kraftmesskopf gemeinsam abnehmbare Einheit bilden. Vorzugsweise ist bei der Modellschneidanordnung eine Blende oder ein Blendensatz vorgesehen, hinter dem die in dem Lagergehäuse montierte Modellschneidrolle während eines Modellschneidversuchs geschützt angeordnet ist. Durch Abnehmen, insbesondere Abschrauben von Blende bzw. Blendensatz wird dann die Einheit aus Lagergehäuse und Modellschneidrolle zur Handhabung durch einen Benutzer freigelegt. Diese kann als Ganzes von der Modellschneidanordnung abgenommen werden oder in diese eingesetzt werden. Dies erlaubt eine einfache Montage und die zügige Durchführung von Modellschneidversuchen.

Gemäß einem Ausführungsbeispiel kann die Modellschneidrolle einen Durchmesser in einem Bereich zwischen ungefähr 0,5 Zoll und ungefähr 5 Zoll, insbesondere zwischen ungefähr 1 Zoll und ungefähr 3 Zoll, haben. Im Vergleich dazu hat eine Realschneidrolle typischerweise einen Durchmesser von 17 Zoll. Die Skalierung hin zu kleineren Größen einer Schneidrolle verändern die grundsätzlichen Aussagen über die Charakteristik eines Schneidversuchs nicht grundsätzlich, sondern modifizieren diese nur in ebenfalls skalierbarer und reproduzierbarer Weise. Dadurch kann im Wesentlichen ohne Erkenntnisverlust der Aufwand für den Modellschneidversuch reduziert werden. Zum Beispiel kann die gesamte Modellschneidrolle gegenüber der Realschneidrolle im Verhältnis 1:8 herunterskaliert sein. Allgemeiner ausgedrückt kann das Skalierungsverhältnis zwischen Modellschneidrolle und Realschneidrolle zum Beispiel in einem Intervall zwischen 1:2 und 1:10 liegen. Die Form von Modellschneidrolle und Realschneidrolle kann identisch sein.

Gemäß einem Ausführungsbeispiel kann die Modellschneidanordnung eine Linearführeinrichtung aufweisen, welche den Kraftmesskopf derart führt, dass dieser nur entlang genau einer mittels der Linearführeinrichtung vorgegebenen, insbesondere vertikalen, Linearachse beweglich ist. Anders ausgedrückt kann der Kraftmesskopf samt Modellschneidrolle an einer Linearschiene montiert sein, so dass deren Bewegung auf die entsprechende Linearbewegung eingeschränkt ist. Diese gezielte Reduktion von Bewegungsfreiheitsgraden erlaubt wiederum das Ausschalten unerwünschter Kraftkomponenten und die Fokussierung auf eine gewünschte Kraftkomponente, insbesondere die vertikal auf die Modellschneidrolle einwirkende Rollkraft.

Gemäß einem Ausführungsbeispiel kann die Modellschneidanordnung eine Eindringtiefeneinstelleinrichtung aufweisen, die zum Einstellen einer Eindringtiefe der Modellschneidrolle in den Gesteinsprobekörper ausgebildet ist. Aufgrund der verhältnismäßig geringen Dimension der Modellschneidrolle (im Vergleich zu einer Realschneidrolle) und in besonderer Weise des Gesteinsprobekörpers (im Vergleich zu einem Gebirge) ist es für ein aussagekräftiges Ergebnis eines Modellschneidversuchs von Vorteil, dass die mechanischen Verhältnisse in dem geschnittenen Gestein realistischen Verhältnissen in einem Gebirge entsprechen. Aus diesem Grund soll der Schneidversuch vorzugsweise an solchen Abschnitten des Gesteinsprobekörpers erfolgen, die ausreichend weit von Randbereichen des Gesteinsprobekörpers entfernt sind. Andernfalls würden Randeffekte die Messergebnisse verfälschen. Indem die Eindringtiefeneinstelleinrichtung eine zugelassene Eindringtiefe der Modellschneidrolle in den Gesteinsprobekörper beschränkt, können ausreichende Randabstände eingehalten und daher artefaktfreie Ergebnisse erhalten werden.

Gemäß einem Ausführungsbeispiel kann die Eindringtiefeneinstelleinrichtung als Abstandshalter zwischen der Montageplattform und dem Kraftmesskopf ausgebildet sein. Mit anderen Worten beabstandet der mechanische Abstandhalter den Probekörper von der Modellschneidrolle so weit, dass ein unerwünscht tiefes Eindringen mechanisch verunmöglicht ist.

Gemäß einem Ausführungsbeispiel kann die Eindringtiefeneinstelleinrichtung ausgebildet sein, die Eindringtiefe in einem Bereich zwischen ungefähr 1 mm und ungefähr 7 mm einzustellen. Diese Eindringtiefe ist geringer als die Eindringtiefe einer Realschneidrolle beim Schneiden von Gebirge, die zum Beispiel 12 mm betragen kann.

Gemäß einem Ausführungsbeispiel kann die Montageplattform derart ausgebildet sein, dass im in dem Aufnahmevolumen aufgenommenen Zustand des Gesteinsprobekörpers dessen oberseitige Probekörperoberfläche mit einer daran direkt angeschlossenen oberseitigen Plattformoberfläche der Montageplattform unter Bildung einer gemeinsamen Oberfläche stetig abschließt. Alternativ oder ergänzend kann die Montageplattform derart ausgebildet sein, dass im in dem Aufnahmevolumen aufgenommenen Zustand des Gesteinsprobekörpers dessen seitliche, aufnahmevolumenaußenseitige Probekörperoberfläche mit einer daran direkt angeschlossenen seitlichen Plattformoberfläche der Montageplattform unter Bildung einer gemeinsamen Seitenfläche stetig abschließt. Das stetige Einpassen des Gesteinsprobenkörpers im dazu invers geformten Aufnahmevolumen erhöht die Messgenauigkeit. Durch den stetigen Übergang zwischen der Probekörperoberfläche und der sich daran vollumfänglich und unterbrechungsfrei anschließenden Plattformoberfläche ist die Krafteinleitung bzw. -übertragung von dem Gesteinsprobenkörper auf die Montageplattform (bzw. *vice versa)* sehr realistisch den Bedingungen in einem Gebirge nachempfunden.

Gemäß einem Ausführungsbeispiel kann die Montageplattform derart ausgebildet sein, dass im in dem Aufnahmevolumen aufgenommenen Zustand des Gesteinsprobekörpers dessen gesamte unterseitige Probekörperoberfläche und/oder dessen gesamte seitliche, aufnahmevolumeninnenseitige Probekörperoberfläche eine korrespondierenden Oberfläche der Montageplattform direkt kontaktiert und an dieser (insbesondere durchgehend oder unterbrechungsfrei) immobilisiert ist. Die im an der Montageplattform aufgenommenen Zustand des Gesteinsprobenkörpers nach außen hin nicht mehr sichtbare Oberfläche des Gesteinsprobenkörpers kann vollflächig und kontaktbehaftet an einer Gegenoberfläche der Montageplattform fixiert (zum Beispiel verklebt bzw. einzementiert) sein, womit auch im Inneren der Kompositanordnung aus Montageplattform und Gesteinsprobenkörper keine mechanischen Unstetigkeiten auftreten, welche im Wege von Randeffekten die Messung an dem Gesteinsprobenkörper stören würden. Durch ein bodenflächiges und/oder in seitlicher Richtung großflächig kontaktbehaftetes und unbewegliches Aufnehmen des Gesteinsprobekörpers in einem entsprechend geformten und dimensionierten Aufnahmevolumen der Montageplattform können aus Randeffekten resultierende Artefakte wirksam unterdrückt werden. Somit kann eine vollflächige Kontaktierung zwischen der gesamten Bodenfläche des Gesteinsprobekörpers und der Montageplattform sowie zwischen der gesamten, in die Montageplattform eingepassten Seitenfläche des Gesteinsprobenkörpers und der Montageplattform ausgebildet werden. Randeffekte können dadurch weiter unterdrückt werden und die Kraftkopplung zwischen Gesteinsprobenkörper und Montageplattform kann dadurch weiter verbessert werden.

Gemäß einem Ausführungsbeispiel kann die Modellschneidanordnung den zu vermessenen Gesteinsprobekörper aufweisen (der somit Teil der Modellschneidanordnung sein kann), der in dem Aufnahmevolumen der Montageplattform immobilisiert aufgenommen ist, so dass der Gesteinsprobekörper entlang seiner gesamten Vertikalerstreckung passgenau in das Aufnahmevolumen der Montageplattform kontaktbehaftet eingepasst ist. Die Anordnung des einen Teil der Modellschneidanordnung bildenden Gesteinsprobekörpers kann darüber hinaus so erfolgen, wie in einem oder beiden der vorangehenden Absätze beschrieben.

Wenn der Gesteinsprobenkörper in dem Aufnahmevolumen der Montageplattform aufgenommen ist, können Gesteinsprobenkörper und Montageplattform gemeinsam eine im Wesentlichen quaderförmige Gestalt einnehmen.

Der Gesteinsprobenkörper und das Aufnahmevolumen können zueinander inverse Gestalt haben, so dass der Gesteinsprobenkörper in das Aufnahmevolumen eingepasst werden kann, ohne dass der darin aufgenommene Gesteinsprobenkörper in irgendeiner Richtung über die Montageplattform übersteht, sondern stattdessen bündig mit dieser abschließt.

Der Gesteinsprobenkörper kann halbkreiszylinderförmig sein. Entsprechend kann das Aufnahmevolumen ein halbkreiszylinderförmiger Hohlraum sein und hinsichtlich seiner Dimension auf den Gesteinsprobenkörper angepasst sein. Ist ein solcher halbkreiszylinderförmiger Gesteinsprobenkörper in ein halbkreiszylinderförmiges Aufnahmevolumen aufgenommen, so berühren sich gekrümmte Mantelflächen der beiden halbkreiszylinderförmigen Strukturen, wohingegen eine ebene, rechteckförmige Mantelfläche des halbkreiszylinderförmigen Gesteinsprobenkörpers einen Teil der Außenfläche der Anordnung aus Gesteinsprobenkörper und Montageplattform bilden kann. Bodenseitig kann der Gesteinsprobenkörper vollflächig in Kontakt mit der Montageplattform sein und auch dort an dieser, zum Beispiel mittels Klebens oder Einzementierens, immobilisiert sein.

Gemäß einem Ausführungsbeispiel kann die Modellieranordnung eine Datenbank (zum Beispiel gespeichert auf einem Speichergerät wie einer Festplatte) aufweisen, in der Referenz-Datensätze gespeichert sind, die eine Korrelation zwischen mittels der Modellschneidanordnung an Referenz-Gesteinsprobekörpern eines jeweiligen Referenz-Gebirges gemessenen, für die jeweilige Schneidkraft indikativen Referenz-Parameter einerseits und für den zugehörigen Vortrieb der mit der jeweiligen Realschneidrolle betriebenen Tunnelbohrmaschine in dem jeweiligen Referenz-Gebirge indikativen Referenz-Parameter andererseits enthalten. Der Prozessor (zum Beispiel ein Mikroprozessor oder eine zentrale Recheneinheit, CPU) kann ausgebildet sein, einen Vortrieb der mit der Realschneidrolle betriebenen Tunnelbohrmaschine beim Abbau des Gebirges basierend auf dem mittels der Modellschneidanordnung an dem Gesteinsprobekörper erfassten, für die Schneidkraft indikativen Parameter sowie basierend auf den Referenz-Datensätzen zu prognostizieren. Um eine zuverlässige Prognose abgeben zu können, wie sich eine Realschneidrolle bei Montage an einer Tunnelbohrmaschine zum Abbau von Gebirge verhält, ist es erfindungsgemäß möglich, einen Modellschneidversuch mit einer Modellschneidrolle an einem dem Gebirge entsprechen Gesteinsprobekörper durchzuführen. Als Ergebnis dieses Modellschneidversuchs erhält man dann den für die Schneidkraft indikativen Parameter, insbesondere den Wert der Rollkraft, welche während des Schneidens zwischen dem Gesteinsprobekörper und der Modellschneidrolle wirkt. Gemäß den beschriebenen Ausführungsbeispiel kann nun auf Referenzdatensätze, die statisch oder dynamisch in einer Datenbank gespeichert sind, zurückgegriffen werden, um zum Beispiel denjenigen Datensatz (oder diejenigen Datensätze) zu ermitteln, welche die größte Ähnlichkeit zu einem aktuell durchgeführten Modellschneidversuch hat. Da dieser Datensatz (oder diese Datensätze) neben den Werten eines Referenz-Modellschneidversuchs zusätzlich zugeordnete Werte eines Referenz-Realschneidversuchs (erhalten aus dem Abbau von Gebirge, dessen Material dem Gesteinsprobekörper des Referenz-Modellschneidversuchs entspricht, mittels einer Realschneidrolle einer Tunnelbohrmaschine) enthält, können die Werte des Referenz-Realschneidversuchs herangezogen werden, um auch für den vorliegenden Modellschneidversuch eine aussagekräftige Prognose abzugeben, zum Beispiel in Bezug auf einen erreichbaren Vortrieb mit der Tunnelbohrmaschine.

Gemäß einem Ausführungsbeispiel kann der Gesteinsprobekörper aus einer Kernbohrung an dem Gebirge erhalten werden. Bei der Erkundung eines Tunnelbauprojekts in einem Gebirge wird standardmäßig eine Kernbohrung durchgeführt, bei der insbesondere kreiszylindrische Gesteinsproben (zum Beispiel mit einem Durchmesser von 10 cm und einer Länge von 20 cm) genommen werden. Diese stehen somit in großer Menge und mit geringem Aufwand zur Verfügung. Gemäß dem beschriebenen Ausführungsbeispiel werden solche Gesteinsproben dazu verwendet, den Modellschneidversuch durchzuführen. Entsprechend kann die Montageplattform - und insbesondere das Aufnahmevolumen - konfiguriert sein. Solche Gesteinsproben können unverändert eingesetzt werden, oder vor Durchführung des Modellschneidversuchs modifiziert, zum Beispiel halbiert, werden.

Gemäß einem Ausführungsbeispiel kann der Gesteinsprobekörper als Halbkreiszylinder aus dem Gebirge erhalten werden. Hierfür kann die zylindrische Gesteinsprobe, die aus der Kernbohrung erhalten wird, in zwei gleich große Teile gespalten werden und dann in das Aufnahmevolumen aufgenommen werden.

Gemäß einem Ausführungsbeispiel kann der Gesteinsprobekörper in zumindest einer Dimension, insbesondere in allen Dimensionen, eine Ausdehnung in einem Bereich zwischen ungefähr 5 cm und ungefähr 20 cm aufweisen, insbesondere in einem Bereich zwischen ungefähr 7 cm und ungefähr 13 cm. Zum Beispiel kann der Gesteinsprobekörper einen Durchmesser von 10 cm und eine Länge von 9 cm haben. Gegenüber einer Gesteinsprobe aus einer Kernbohrung kann somit der Probegesteinskörper halbiert und abgelängt werden.

Gemäß einem Ausführungsbeispiel kann der Gesteinsprobekörper in dem Aufnahmevolumen der Montageplattform einzementiert werden. Durch das Einzementieren oder Einkleben des Gesteinsprobekörpers in die Montageplattform ohne Spalte, Hohlräume oder sonstige materialfreie Zwischenräume zwischen Gesteinsprobekörpers und Montageplattform kann, insbesondere wenn die Montageplattform aus (vorzugsweise massivem) Stahl hergestellt ist, dem kleinvolumigen Gesteinsprobekörper Eigenschaften verliehen werden, die jenen in einem quasi-unendlichen Gebirge entsprechen. Anders ausgedrückt können dadurch Randeffekte weiter eingedämmt oder vermieden werden, und dadurch kann die Aussagekraft der erhaltenen Messergebnisse weiter verbessert werden.

Die Modellschneidanordnung kann so konfiguriert werden, dass eine Maximalbelastung, die auf die Modellschneidrolle einwirkt, einen vorbestimmten Grenzwert nicht überschreitet.. Auf diese Weise kann eine Zerstörung der Modellschneidrolle bzw. anderer Komponenten der Modellschneidanordnung durch Überbelastung vermieden werden.

Im Folgenden werden exemplarische Ausführungsbeispiele der vorliegenden Erfindung mit Verweis auf die folgenden Abbildungen detailliert beschrieben.
Fig. 1 zeigt eine erste räumliche Ansicht einer Modellschneidanordnung gemäß einem exemplarischen Ausführungsbeispiel der Erfindung.
Fig. 2 zeigt eine zweite räumliche Ansicht der Modellschneidanordnung gemäß Fig. 1.
Fig. 3 bis Fig. 5 zeigen jeweils eine Querschnittsansicht eines Teils der Modellschneidanordnung gemäß Fig. 1.
Fig. 6 bis Fig. 9 zeigen, wie ein Gesteinsprobekörper in eine Montageplattform der Modellschneidanordnung gemäß Fig. 1 einzementiert wird.
Fig. 10 und Fig. 11 zeigen Diagramme, die einen Zusammenhang zwischen Eindringtiefe und Rollkraft einer Modelldiske während Modellschneidversuchen mit der Modellschneidanordnung gemäß Fig. 1 bis Fig. 5 zeigen.
Fig. 12 zeigt eine Tunnelbohrmaschine mit einem Bohrkopf mit einer Vielzahl von Abbauwerkzeugen mit Realdisken, die gemäß einem exemplarischen Ausführungsbeispiel der Erfindung gesteuert wird.
Fig. 13 zeigt ein Blockdiagramm eines Verfahrens zum Durchführen von Schneidversuchen an einem Gesteinsprobekörper mittels einer hydraulischen Presse zum Ermitteln von Modelldaten zum Modellieren des Vorgangs des Abbaus von Gebirge mittels einer Realschneidrolle an einem Bohrkopf einer Tunnelbohrmaschine und zum Prognostizieren des Vortriebs einer Tunnelbohrmaschine beim Abbau von Gebirge gemäß einem exemplarischen Ausführungsbeispiel der Erfindung.
Fig. 14 zeigt das Aussehen einer vertikalen Außenfläche eines Gesteinsprobekörpers nach Durchführung eines Modellschneidversuchs in einem in die Montageplattform einzementierten Zustand.

Gleiche oder ähnliche Komponenten in unterschiedlichen Abbildungen sind mit gleichen Bezugsziffern versehen.

Bevor die Figuren näher beschrieben werden, soll ein Ausführungsbeispiel der Erfindung noch in allgemeiner Form beschrieben werden.

Gemäß einem exemplarischen Ausführungsbeispiel wird ein Modellgesteinschneidtest durchgeführt, indem eine standardisierte oder herkömmliche hydraulische Presse, wie sie in Labors zur Untersuchung der Gesteinsmechanik üblicherweise zur Verfügung steht, lediglich punktuell mit Zusatzkomponenten versehen wird. Rotierfähige Diskenschneider werden zum mehrmaligen Schneiden von Gesteinsproben mit der Möglichkeit verwendet, die Eindringtiefe und/oder den Eindringabstand einzustellen. Hierfür können Standardprobegrößen, wie sie bereits in der Frühphase von Tunnelbauprojekten üblicherweise zur Verfügung stehen, eingesetzt werden, so dass dieser Test auch für die Voraussage der Leistungsfähigkeit (zum Beispiel eines erreichbaren Vortriebs) des Betriebs der Tunnelbohrmaschine verwendet werden kann. Die Ergebnisse des Modellschneidtests können dann mit Linearschneidtests mit Diskenschneidern realer Größe und mit geotechnischen Standardwerten (wie zum Beispiel die uniaxiale Druckfestigkeit und die indirekte Zugfestigkeit) verglichen werden. Die Qualität der Ergebnisse, die mit einem solchen Modellgesteinsschneidtest gemäß einem exemplarischen Ausführungsbeispiel der Erfindung erhalten werden kann, ist geotechnischen Standardtests überlegen. Ferner sind mit einer erfindungsgemäßen Modellschneidanordnung durchgeführte Tests gleichzeitig billiger und einfacher durchzuführen als Gesteinsschneidtests mit Diskenschneidern realer Größe.

Die Ausgestaltung eines Modellgesteinsschneidtests gemäß einem exemplarischen Ausführungsbeispiel der Erfindung kann dahingehend erfolgen, dass die Geometrie der Gesteinsproben so ausgewählt wird, dass sie bereits in einer frühen Phase eines Tunnelprojekts zur Verfügung stehen. Das Einspannen der Gesteinsproben sollte zu vergleichbaren mechanischen Eigenschaften bzw. Bedingungen führen, wie sie in quasi-unendlichem Gestein herrschen. Es kann ferner ein rotierfähiger skalierter bzw. modellierter Diskenschneider mit einer realistischen Geometrie verwendet werden. Die Eindringtiefe oder Penetration ist sehr präzise einstellbar. Ferner ist zusätzlich zu einer Kraftmesszelle in einer hydraulischen Presse keine weitere Messausrüstung erforderlich.

Um diese Rahmenbedingungen zu erfüllen, verwendet ein exemplarisches Ausführungsbeispiel der Erfindung einen kreiszylindrischen Gesteinskern mit einem Durchmesser von 10 cm, der zu einer halbkreiszylindrischen Gesteinsprobe mit einer Höhe von ungefähr 9 cm zugeschnitten werden kann, da der maximale Hub einer typischen hydraulischen Presse 10 cm beträgt. Die Größe des skalierten oder modellierten Diskenschneiders kann so ausgewählt werden, dass sie zu der Größe des Probekörpers passt, ohne dass Risse bis zu einem Rand der Probe hinreichen. Zum Beispiel kann ein Stahlschneider mit einer gehärteten (z.B. karbonitrierten) Oberfläche verwendet werden, der im Wesentlichen ein 1:8 Modell einer typischen Diske mit einem Durchmesser von 17 Zoll darstellt.

Während der Montage kann der Diskenschneider aufgeheizt und dann auf eine Welle aufgeschrumpft werden, die auf ein kombiniertes Nadel-/Kugellager aufgesetzt werden kann, um eine ausreichende maximale Belastungskapazität und eine ungestörte Rotation zu ermöglichen. Das Schneidgehäuse wird dann auf einer Linearführung angeordnet, die einen geradlinigen Schneidpfad definiert, wenn der Schneider in den Probekörper eingeführt wird. Der Probenhalter bzw. die Montageplattform kann ein steifer Stahlblock sein, in den die Gesteinsprobe mit einem zweikomponentigen Epoxidharz einzementiert werden kann, um eine optimale Einspannung zu ermöglichen. Er kann mit Bolzen oder dergleichen entweder in einer zentralen Position oder mit einem Offset auf sein Gegenstück aufgesetzt werden, um wechselwirkende Schneidvorgänge mit einer Beabstandung dazwischen zu simulieren. Abstandshalter aus Stahl können zwischen Probenhalter und Diskenschneider angeordnet werden, um es zu ermöglichen, die gewünschte Eindringtiefe des Schneiders einzustellen. Eine Last kann über ein Lasteinleitungselement angelegt werden, das in einer horizontalen Richtung frei beweglich sein kann. Dadurch kann sichergestellt werden, dass Kräfte nur in Schneidrichtung wirken.

Wünschenswerte Eindringtiefen können für eine solche Apparatur in einem Bereich zwischen 1 mm und 3 mm liegen. Daher kann für alle beweglichen Teile (insbesondere für Lager) ein geringes Spiel ausreichend sein, um Ergebnisse negativ zu beeinträchtigen. Ein Spiel von zum Beispiel ±0,2 mm würde eine Streuung im Bereich von ±20 % bewirken, wenn die Eindringtiefe 1 mm beträgt. Daher ist die Auswahl der Lager, deren Herstelltoleranzen und der Prozess des Zementierens des Probekörpers in seinen Halter mit hoher Präzision durchzuführen.

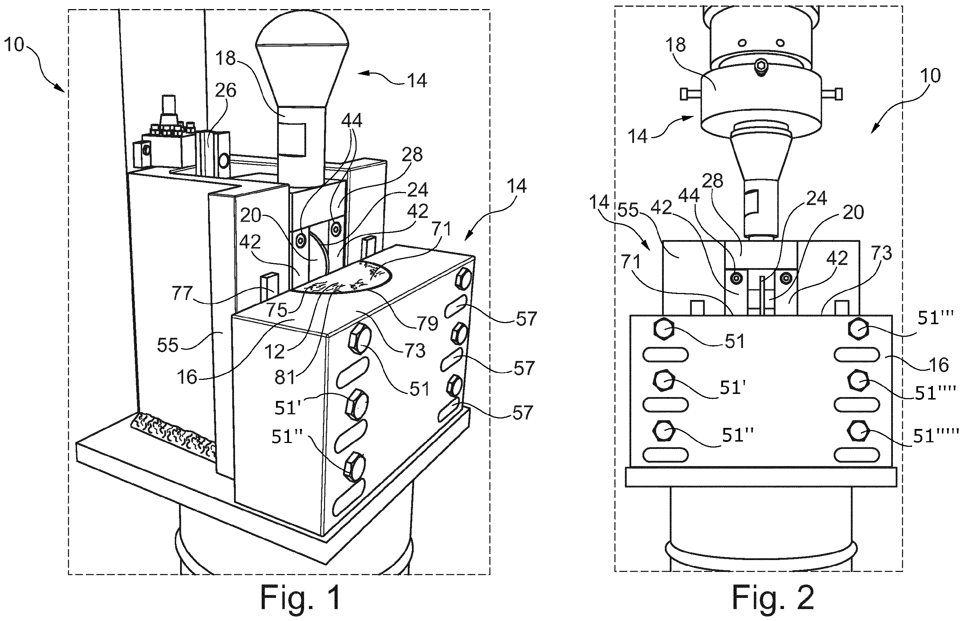

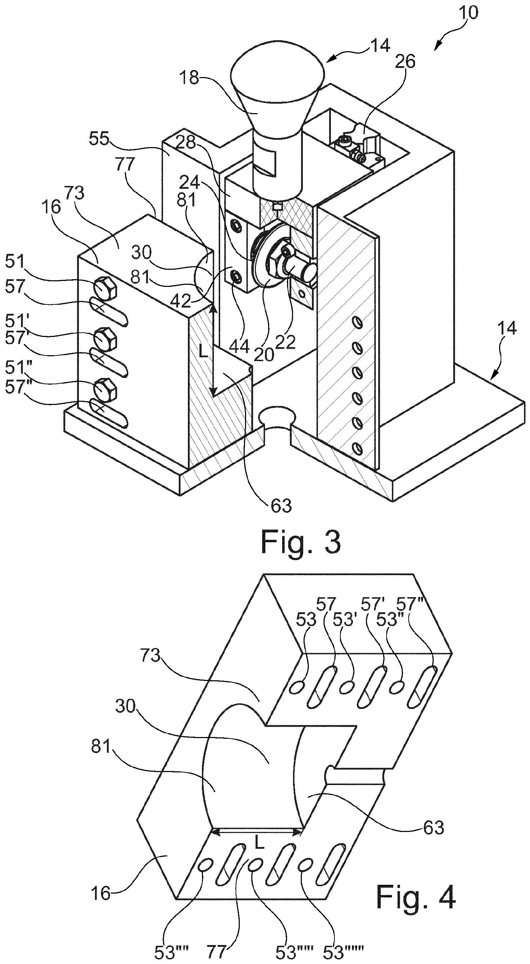

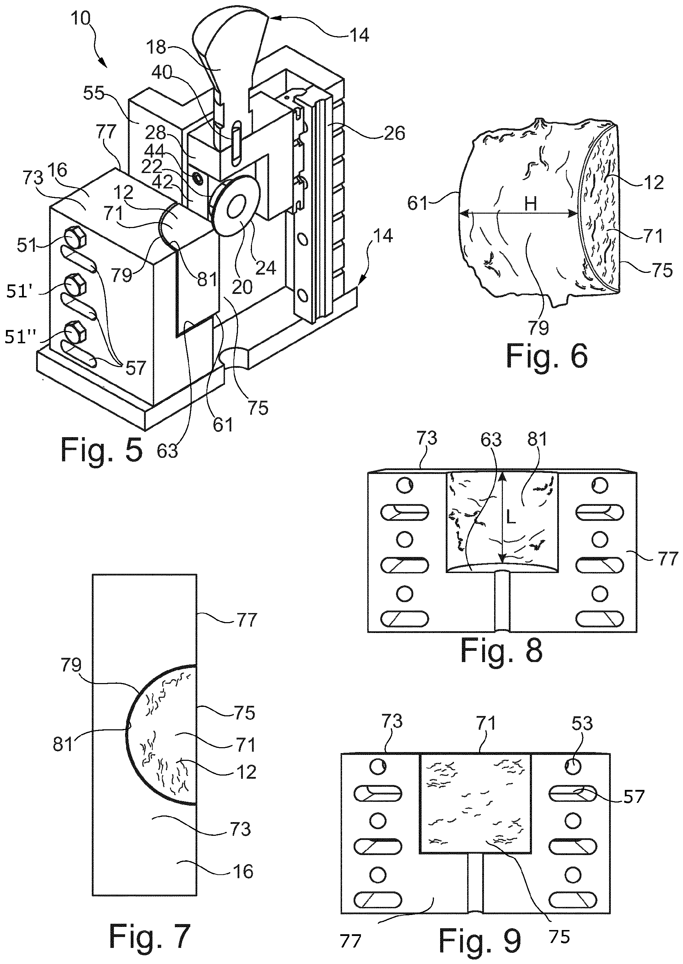

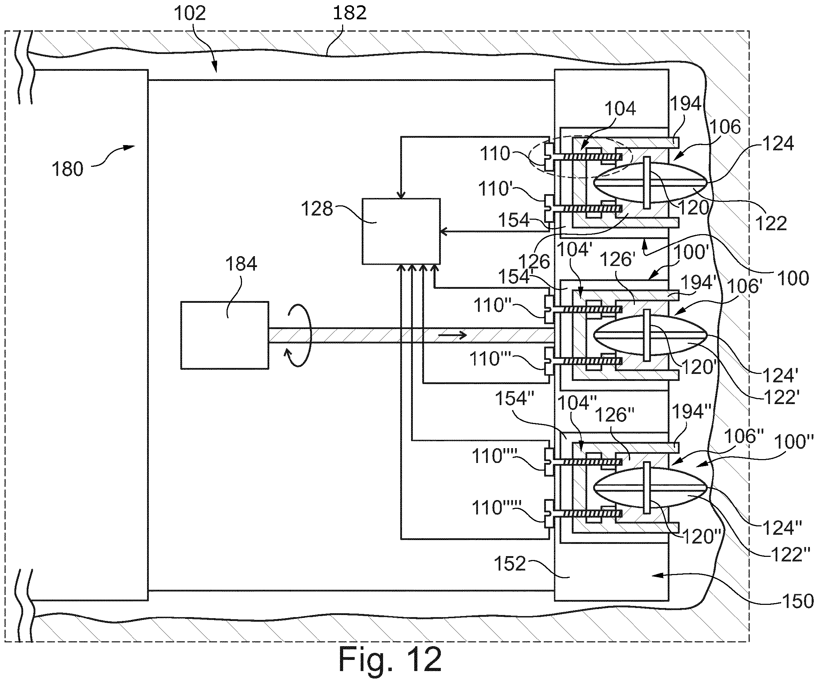

**Fig. 1** und **Fig. 2** zeigen räumliche Ansichten einer Modellschneidanordnung 10 zum Durchführen von Schneidversuchen an einem halbkreiszylindrischen Gesteinsprobekörper 12 gemäß einem exemplarischen Ausführungsbeispiel der Erfindung. Anhand von Querschnittsansichten der Modellschneidanordnung 10, die in **Fig. 3** (ohne Gesteinsprobekörper 12) und **Fig. 5** (mit Gesteinsprobekörper 12) gezeigt sind, sind weitere Details erkennbar. Derartige Schneidversuche können zum Ermitteln von Modelldaten zum Modellieren des Vorgangs des Abbaus von Gebirge, dessen Material jenem des Gesteinsprobekörpers 12 entspricht, mittels einer Realschneidrolle (die auch Tunnelbohrmaschine-Schneidrolle genannt werden kann, siehe Fig. 12) an einem Bohrkopf einer Tunnelbohrmaschine verwendet werden.

Die Modellschneidanordnung 10 verwendet eine Modellschneidrolle 20 (die zum Beispiel einen Kreisdurchmesser von 56 mm aufweisen kann), die wie eine an einer tatsächlichen Tunnelbohrmaschine eingesetzte Realschneidrolle (die zum Beispiel einen Durchmesser von 17 Zoll aufweisen kann) ausgebildet ist, allerdings im Maßstab 1:8 gegenüber einer Realschneidrolle herunterskaliert bzw. verkleinert ist. Damit ist erfindungsgemäß ein sehr einfacher, kleindimensionierter Modellschneidversuch ermöglicht, der Aufschlüsse über einen Schneidprozess von Gebirge mittels der Realschneidrolle erlaubt, ohne dass ein tatsächliches Experiment mit der Realschneidrolle an einem Bohrkopf einer Tunnelbohrmaschine an dem Gebirge durchgeführt werden muss. Der Transfer der Ergebnisse des Modellschneidversuchs auf die Verhältnisse einer Tunnelbohrmaschine und somit einer Realschneidrolle kann empirisch (d.h. auf Basis von experimentell erfassten Datensätzen) und/oder rechnerisch (d.h. auf der Basis von mathematischen und/oder physikalischen Modellen) erfolgen.

Basis der Modellschneidanordnung 10 ist eine an sich bekannte hydraulische Presse 14, wie sie in vielen Labors standardmäßig zur Verfügung steht. Diese wird erfindungsgemäß konfiguriert, um als Modellschneidanordnung 10 dienen zu können. Aus der Möglichkeit, durch einfache Modifizierung einer herkömmlichen hydraulischen Presse 14 eine funktionsfähige Modellschneidanordnung 10 bereitstellen zu können, resultiert der signifikante Vorteil von Ausführungsbeispielen der Erfindung, demzufolge der Aufwand für einen Modellschneidversuch sehr gering gehalten werden kann. Die hydraulische Presse 14 enthält als ihre beiden grundlegenden Komponenten einen vertikal (d.h. nach oben bzw. nach unten) beweglichen Kraftmesskopf 18 und einen vertikal unbeweglichen (das heißt bezüglich der zugehörigen Koordinate ortsfesten) und horizontal unbeweglichen (d.h. in der Ebene senkrecht zu der Vertikalen) Montageplattform 16.

Eine Modellschneidrolle 20 (oder verkleinerte Diske), die gegenüber der Realschneidrolle (oder originalen Diske) eine zum Beispiel im Maßstab 1:8 verringerte Dimension aufweist, dient anschaulich als Modell für die Realschneidrolle und ist zum Schneiden des Gesteinsprobekörpers 12 ausgebildet, wenn sie mit ausreichender Antriebskraft auf den Gesteinsprobenkörper 12 gedrückt wird. Die Modellschneidrolle 20 ist an dem Kraftmesskopf 18 montiert.

Die Montageplattform 16 ist als Stahlform ausgebildet, in der ein hohles halbkreiszylindrisches Aufnahmevolumen 30 zum kontaktbehafteten und immobilisierten Aufnehmen des entsprechend geformten und dimensionierten halbkreiszylindrischen Gesteinsprobekörpers 12 ausgebildet ist. Der Gesteinsprobekörper 12 wird entlang seiner gesamten Vertikalerstreckung (das heißt entlang seiner gesamten Höhe H) passgenau in das Aufnahmevolumen 30 (Höhe L) der Montageplattform 16 kontaktbehaftet eingepasst, wie in Fig. 1 und Fig. 5 gezeigt. Im in dem Aufnahmevolumen 30 aufgenommenen Zustand des Gesteinsprobekörpers 12 schließt dessen oberseitige Probekörperoberfläche 71 mit einer daran direkt angeschlossenen oberseitigen Plattformoberfläche 73 der Montageplattform 16 unter Bildung einer gemeinsamen Oberfläche stetig ab und schließt dessen seitliche, aufnahmevolumenaußenseitige Probekörperoberfläche 75 mit einer daran direkt angeschlossenen seitlichen Plattformoberfläche 77 der Montageplattform 16 unter Bildung einer gemeinsamen Seitenfläche stetig ab. Dies ist besonders gut in Fig. 5 zu erkennen. Die gesamte verbleibende Oberfläche 79, 61 des Gesteinsprobekörpers 12 ist mit einer korrespondierenden Oberfläche 81, 63 der Montageplattform 16 direkt in Kontakt und an dieser immobilisiert (vgl. hierzu auch Fig. 6 und Fig. 8).

Genauer gesagt berührt die gesamte gekrümmte Mantelfläche 79 des Gesteinsprobekörpers 12 eine korrespondierende Oberfläche 81 der Stahlform und ist an dieser, zum Beispiel mittels Zementierens oder Festklebens, fest angebracht, so dass durch die Modellschneidrolle 20 eingeleitete Lasten an die Stahlform weitergegeben werden. Ferner kontaktiert eine Bodenfläche 71 des Gesteinsprobekörpers 12 eine Bodenfläche 63 des Aufnahmevolumens 30. Durch eine derartige rigide Kopplung zwischen Montageplattform 16 und dem Gesteinsprobenkörper 12 können die Verhältnisse in einem realen Gebirge mechanisch realistisch simuliert werden, da die dortige im Wesentlichen unendliche Ausdehnung von Gestein durch die feste Einspannung bzw. Einpassung des kleinen Gesteinsprobenkörpers 12 hinsichtlich der mechanischen Lastübertragung mit guter Präzision nachgebildet wird.

In **Fig. 4** ist zu erkennen, wie die Montageplattform 16 ohne eingesetzten Gesteinsprobenkörper 12 aussieht.

Die andere Hauptkomponente der hydraulischen Presse 14 ist der Kraftmesskopf 18, an dessen Unterseite die Modellschneidrolle 20 fest und kraftschlüssig montiert bzw. durch einen Benutzer montierbar ist. Der Kraftmesskopf 18 ist so ausgebildet, dass bei Schneiden des Gesteinsprobekörpers 12 mittels der an seiner Unterseite montierten Modellschneidrolle 20 ein für die Schneidkraft indikativer Parameter erfassbar ist. Bei dem gezeigten Ausführungsbeispiel ist der für die Schneidkraft indikative Parameter die in vertikaler Richtung wirkende Rollkraft, die beim Schneiden auf die Modellschneidrolle 20 einwirkt. Dringt also die Modellschneidrolle 20 durch hydraulisch getriebenes Herunterfahren des statischen Kraftmesskopfs 18 in Richtung der Montageplattform 16 in eine planare, vertikal orientierte und freiliegende Oberfläche 75 des Gesteinsprobekörpers 12 ein und schneidet dabei das Gesteinsmaterial ähnlich wie eine Realschneidrolle einer Tunnelbohrmaschine in abzubauendes Gebirge einschneidet, so erfasst eine in Fig. 5 gezeigte uniaxiale Kraftmesszelle 40 die vertikale Rollkraft.

Die hydraulische Presse 14 ist ausgebildet, dass der Kraftmesskopf 18 relativ zu der ortsfesten Montageplattform 16 mittels eines Hydraulikzylinders gegenüber dem Laborsystem in vertikaler Richtung, d.h. in einer Richtung parallel bzw. antiparallel zu der Gravitationskraft, bewegbar ist. Die Modellschneidanordnung 10 weist zum Definieren der Bewegungsrichtung des Kraftmesskopfs 18 eine Linearführung 26 auf. Der Kraftmesskopf 18 ist aber derart aufgehängt, dass eine Ausgleichsbewegung in der horizontalen Ebene, d.h. in der Ebene senkrecht zur Vertikalen, ermöglicht ist. Bei seitlichen Störkräften ist also eine freie Ausgleichsbewegung des Kraftmesskopfs 18 ermöglicht, so dass solche Störkräfte keinen unerwünschten Einfluss auf den erfassten Parameter haben. Entsprechend ist der Kraftmesskopf 18 ausgebildet, eine ausschließlich uniaxiale Kraftmessung ausschließlich in vertikaler Richtung zu ermöglichen. Im Speziellen ist der Kraftmesskopf 18 ausgebildet, ausschließlich die auf die rotierfähig gelagerte Modellschneidrolle 20 einwirkende Rollkraft zu messen.

Die Modellschneidrolle 20 ist in einem Lagergehäuse 22 an dem Kraftmesskopf 18 rotierfähig gelagert und weist eine umlaufende Schneidkante 24 zum Schneiden des Gesteinsprobekörpers 12 auf. Dies ist in Fig. 3 und in Fig. 5 gut zu erkennen. Die Modellschneidrolle 20 und das Lagergehäuse 22 bilden eine von dem Kraftmesskopf 18 gemeinsam abnehmbare Einheit. Damit ist die Montage einer Einheit aus einer Modellschneidrolle 20 und eines zugehörigen Lagergehäuses 22 auf die Modellschneidanordnung 10 mit wenigen Handgriffen bewerkstelligbar. Zum Demontieren der Einheit ist es ausreichend, mittels Lösens von Schraubverbindungen 44 Blenden 42 von der Modellschneidanordnung 10 abzunehmen und nachfolgend die Einheit aus der Modellschneidanordnung 10 herauszuziehen.

Die maximale Eindringtiefe der Modellschneidrolle 20 in den Gesteinsprobenkörper 12 wird durch einen Abstandshalter 28 auf zum Beispiel 7 mm beschränkt, indem der Abstandshalter 28 aufgrund seiner geometrischen Ausdehnung einen minimalen Abstand zwischen der Montageplattform 16 und dem Kraftmesskopf 18 vorgibt. Durch Konfiguration des Abstandshalters 28 ist somit auch eine genaue Einstellung der Eindringtiefe möglich.

Fig. 1 bis Fig. 5 zeigen auch, dass Schrauben 51 durch Aufnahmeöffnungen 53 in der Montageplattform 16 hindurchgeführt sind, um die Montageplattform 16 an einem Stützkörper 55 zu befestigen. Es ist auch möglich, Schrauben 51 an Langlöchern 57 zu befestigen, um den Gesteinsprobenkörper 12 entlang der Rotationsachse der Modellschneidrolle 20 zu verschieben und somit Modellschneidversuche an unterschiedlichen Positionen durchführen zu können. Insbesondere kann dann die Wechselwirkung eines ersten Schneidversuchs mit einem zweiten Schneidversuch untersucht werden.

Fig. 6 bis Fig. 9 zeigen, wie der aus einer Kernbohrung eines Tunnelbauprojekts stammende Gesteinsprobenkörper 12 bearbeitet wird, um ihn umfänglich kontaktbehaftet und immobilisiert in dem in Fig. 4 gezeigten Aufnahmevolumen 30 der Montageplattform 16 passgenau einzufügen.

Aus einer solchen Kernbohrung stammende Gesteinsproben haben häufig eine kreiszylindrische Form. Zum Beispiel können diese eine Länge von 20 cm und einen Durchmesser von 10 cm haben.

Um eine derartige Gesteinsprobe als Gesteinsprobenkörper 12 für die Modellschneidanordnung 10 nutzbar zu machen, kann diese in zwei halbkreiszylinderförmige Körper gespalten werden. Diese können dann optional noch gekürzt werden, zum Beispiel auf einen Halbkreiszylinder der Länge 9 cm und des Durchmessers 10 cm. Ein entsprechend erhaltener Gesteinsprobenkörper 12 ist in **Fig. 6** gezeigt, wobei dessen gekrümmte Mantelfläche 79 und dessen untere Deckfläche71 mit Zement bestrichen gezeigt sind. Mittels des Zements wird der Gesteinsprobenkörper 12 dann, wie in **Fig. 7** gezeigt, formschlüssig in das Aufnahmevolumen 30 eingepasst und dort mittels des aushärtenden Zements oder eines anderen Klebemittels starr befestigt. Ergebnisse der beschriebenen Prozedur sind in Fig. 7 in einer Draufsicht sowie in **Fig. 9** in einer Seitenansicht gezeigt. **Fig. 8** zeigt die Montageplattform 16 ohne Gesteinsprobenkörper 12, wobei eine das Aufnahmevolumen 30 begrenzende Wandung der Montageplattform 16 mit Zement bestrichen gezeigt ist.

Um die Anordnung gemäß Fig. 9 zu erhalten, wird also der Gesteinsprobenkörper 12 gemäß Fig. 6 in das Aufnahmevolumen 30 gemäß Fig. 8 entlang seiner vollen Höhe H eingepasst. Anders ausgedrückt ist die Höhe H des Gesteinsprobenkörpers 12 gleich der Höhe L des Aufnahmevolumens 30. Dann schließt, wie Fig. 7 und Fig. 9 zu entnehmen ist, die halbkreisförmige Deckfläche 71 des Gesteinsprobenkörpers 12 bündig oder stetig mit der angrenzenden Deckfläche 73 der Montageplattform 16 ab, und es schließt die rechteckförmige Seitenfläche75 des Gesteinsprobenkörpers 12 bündig oder stetig mit der angrenzenden Seitenfläche 77 der Montageplattform 16 ab.

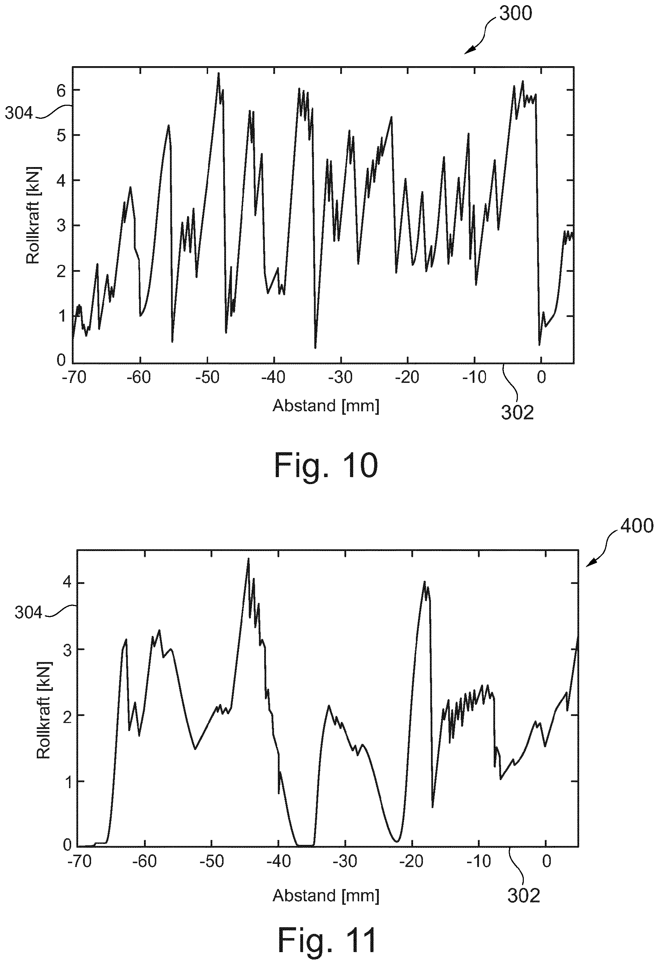

Ist die Modellschneidrolle 20 an dem Kraftmesskopf 18 montiert und ist der Gesteinsprobenkörper 12 an der Montageplattform 16 befestigt, kann mit der Messung der Rollkraft begonnen werden. Ergebnisse solcher Messungen sind in Fig. 10 und in Fig. 11 gezeigt.

**Fig. 10** zeigt ein Diagramm 300, bei dem entlang einer Abszisse 302 eine Eindringtiefe bzw. ein Verfahrabstand aufgetragen ist, wohingegen entlang einer Ordinate 304 eine gemessene Rollkraft aufgetragen ist. Die Messung gemäß Fig. 10 bezieht sich auf eine Gesteinsprobe aus Brixner Granit, wobei der Schnitt am ungeschädigten Material vollführt wurde.

**Fig. 11** zeigt ein Diagramm 400, bei dem entlang einer Abszisse 302 wiederum eine Eindringtiefe bzw. ein Verfahrabstand aufgetragen ist, wohingegen entlang einer Ordinate 304 wiederum eine gemessene Rollkraft aufgetragen ist. Die Messung gemäß Fig. 11 bezieht sich ebenfalls auf die Gesteinsprobe aus Brixner Granit, wobei ein zweiter Schnitt an demselben Probekörper wie gemäß Fig. 10 vollführt wurde.

**Fig. 12** zeigt eine Tunnelbohrmaschine 180 zum Abbauen eines Gebirges 102, in das bereits ein Bohrloch 182 eingebracht worden ist. Das Bohren erfolgt derart, dass das Bohrloch 182 gemäß Fig. 12 nach rechts hin sukzessive erweitert wird. Dem Fachmann ist bekannt, dass eine Tunnelbohrmaschine 180 eine Vielzahl von Komponenten aufweist. Aus Gründen der Anschaulichkeit ist in Fig. 1 aber lediglich ein Bohrkopf 150 mit einer Vielzahl von (zum Beispiel 50 bis 100) Abbauwerkzeugen 100 gezeigt. Genauer ausgedrückt, weist der Bohrkopf 150 einen rotatorisch und translatorisch gegenüber dem Gebirge 102 bewegbaren Bohrkörper 152 auf, an dessen vorderseitiger oder gebirgeseitiger Stirnseite eine Vielzahl von Abbauwerkzeughalterungen oder -aufnahmen 154 angebracht sind. Diese sind über die kreisförmige Stirnfläche des Bohrkörpers 152 hinweg verteilt, was in der Querschnittsansicht von Fig. 12 nur teilweise zu erkennen ist. Jede der Abbauwerkzeughalterungen 154 ist zum Haltern eines jeweiligen Abbauwerkzeugs 100 eingerichtet. Anders ausgedrückt kann ein Abbauwerkzeug 100 in jeder der Abbauwerkzeughalterungen 154 montiert werden.

Jedes der Abbauwerkzeuge 100 weist eine an dem Bohrkopf 150 montierbare Diskenbefestigungseinrichtung 104 mit einem Aufnahmelager zum Aufnehmen und Lagern einer rotierfähigen Diske 106 auf, die ebenfalls Teil des Abbauwerkzeugs 100 ist. Die Diske 106 wird auch als Realschneidrolle bezeichnet und hat einen Durchmesser von 17 Zoll.

Jede Diskenbefestigungseinrichtung 104 hat eine Diskenaufnahme 194, die als eine Art Topf ausgestaltet sein kann, der speziell dafür konfiguriert ist, eine Diske 106 als auswechselbares Modul aufzunehmen. Befestigungsschrauben 110 bilden weitere Komponenten der Diskenbefestigungseinrichtung 104.

Wenn eine Diske 106 an einer jeweiligen Diskenbefestigungseinrichtung 104 montiert ist, kann eine umfängliche Schneidkante 124 der jeweiligen Diske 106 im rotierendem Zustand zum Abbauen des Gebirges 102 an Letzteres angreifen. Die Diske 106 ist in dem Aufnahmelager der Diskenbefestigungseinrichtung 104, bzw. genauer gesagt in der Diskenaufnahme 194, auswechselbar aufgenommen.

Die Diske 106 weist eine Achse 120 auf, auf welcher ein Lager und darauf ein Rollengrundkörper 122 mit Schneidring 124 befestigt ist, welcher über das Gestein abrollen kann. Der Rollengrundkörper 122 hat eine umfängliche Schneidkante in Form von Schneidring 124, die im rotierenden Zustand das Gebirge 102 schneidet, bohrt oder abträgt. Ein Lager 126 der Diske 106 ist zum Aufnehmen der Achse 120 konfiguriert. Der gesamte Bohrkopf 150 wird (zum Beispiel mittels eines Elektromotors 184) angetrieben, die Diske 106 selbst folgt dieser Bewegung, sie rollt also nur ab.

Ein wichtiger Betriebsparameter zum Betreiben der Tunnelbohrmaschine 180 ist deren Vortriebsleistung, d.h. Menge des abgetragenen Gesteins pro Zeiteinheit. Um diese zu prognostizieren, können zunächst Modellschneidversuche (vergleiche Beschreibung zu Fig. 1 bis Fig. 11) an Modellschneidrollen 20 durchgeführt werden. Aus den ermittelten Rollkräften kann dann der Vortrieb der Tunnelbohrmaschine 180 rechnerisch prognostiziert werden, wobei das Größenverhältnis zwischen Modellschneidrolle 20 und Realschneidrolle oder Diske 106 zu berücksichtigen ist. Ergebnisse des Modellschneidversuchs können auch dazu verwendet werden, die Steuerung der Tunnelbohrmaschine 180 mittels einer Steuereinheit 128 vorzunehmen.

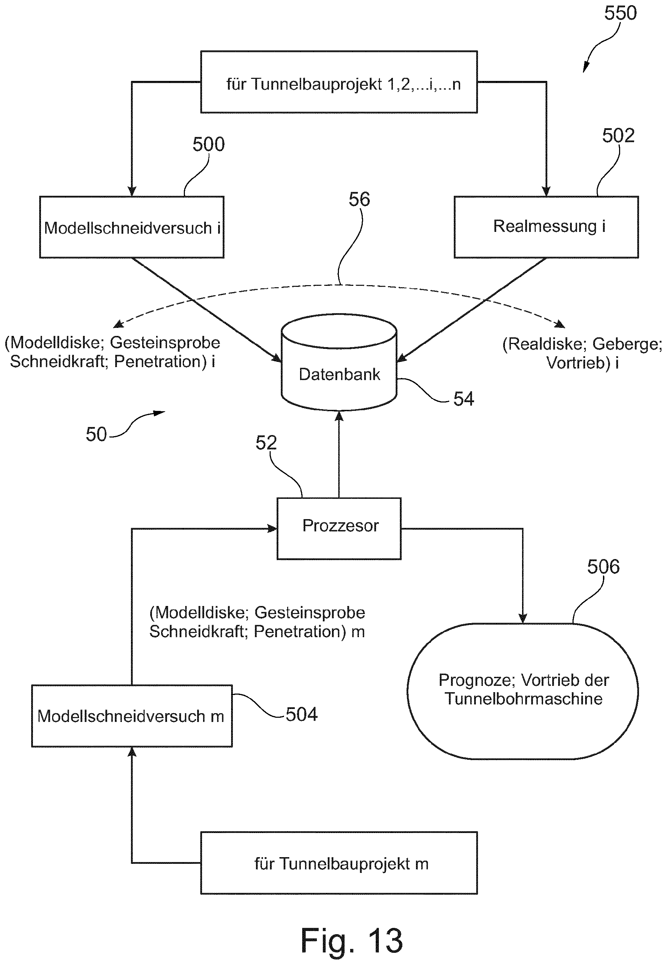

**Fig. 13** zeigt ein Blockdiagramm 550 eines Verfahrens zum Durchführen von Schneidversuchen an einem Gesteinsprobekörper 12 mittels einer hydraulischen Presse 14 zum Ermitteln von Modelldaten zum Modellieren des Vorgangs des Abbaus von Gebirge 102 mittels einer Realschneidrolle 106 an einem Bohrkopf 150 einer Tunnelbohrmaschine 180 und zum Prognostizieren des Vortriebs der Tunnelbohrmaschine 180 beim Abbau von Gebirge 102 gemäß einem exemplarischen Ausführungsbeispiel der Erfindung.

Bevor eine solche Prognose erstellt wird, wird zunächst für eine Anzahl von n (ganze Zahl, zum Beispiel mindestens 10) Tunnelbauprojekten jeweils ein Modellschneidversuch 500 an einer Modellschneidrolle 20 der Modellschneidanordnung 10 (siehe Fig. 1 bis Fig. 11) und eine zugehörige Realmessung 502 an einer Realschneidrolle 106 der Tunnelbohrmaschine 180 (siehe Fig. 12) durchgeführt. Für den Modellschneidversuch 500 wird ein Gesteinsprobenkörper 12 verwendet, der aus Gebirge 102 extrahiert wird, in dem die Tunnelbohrmaschine 180 die Realmessung 502 durchführt.

In einer Datenbank 54 werden dann Datensätze 56 gespeichert, die aus den beschriebenen Messungen gewonnen werden. Jeder der Datensätze 56 weist ein Paar von Daten auf. Das erste Datum eines jeweiligen Paars enthält Angaben zu Modelldiske 20, Gesteinsprobekörper 12, ermittelter Schneidkraft und Penetration des zugehörigen Modellschneidversuchs 500. Das zweite Datum eines jeweiligen Paars enthält Angaben zu Realdiske 106, Gebirge 102 und Vortrieb der Tunnelbohrmaschine 180. Je mehr Paare von Daten in der Datenbank 54 gespeichert sind, umso genauer kann eine zukünftige Prognose für ein neues Tunnelbauprojekt m sein.

Im Falle eines neuen Tunnelbauprojekts m wird zunächst ein Modellschneidversuch 504 an einem zugehörigen Gesteinsprobekörper 12 des bei dem neuen Tunnelbauprojekts m zu bearbeitenden Gebirges 102 durchgeführt. Parameter dieses Modellschneidversuchs 504 werden einem Prozessor 52 zugeführt. Diese Parameter enthalten Angaben zu Modelldiske 20, Gesteinsprobenkörper 12, ermittelter Schneidkraft und Penetration des zugehörigen Modellschneidversuchs 504. Der Prozessor 52 durchsucht die Datenbank 54 nach einem oder mehreren ersten Daten, die mit den Parametern des Modellschneidversuchs 504 bestmöglich übereinstimmen. Basierend hierauf kann, insbesondere auf Basis des jeweiligen zweiten Datums des oder der am besten passenden ersten Daten eine Prognose 506 hinsichtlich eines erreichbaren Vortriebs der Tunnelbohrmaschine 150 abgegeben werden.

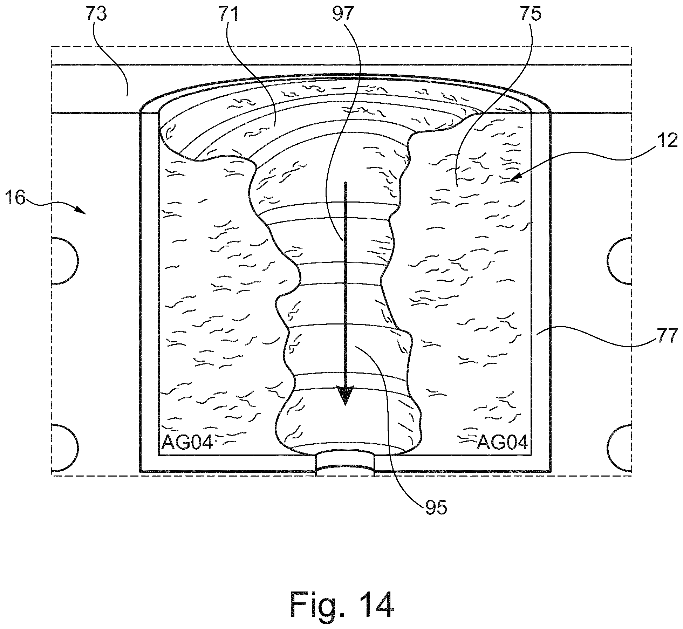

**Fig. 14** zeigt das Aussehen einer vertikalen Außenfläche 75 des Gesteinsprobekörpers 12 nach Durchführung eines Modellschneidversuchs in einem in die Montageplattform 16 einzementierten Zustand. Auch eine horizontale Deckfläche 71 des Gesteinsprobenkörpers 12 ist in Fig. 14 zu erkennen. Ferner ist in einem zentralen Abschnitt 95 der horizontalen Deckfläche 71 des Gesteinsprobenkörpers 12 von Fig. 14 die Beschädigung des Gesteins durch die Einwirkung der in Fig. 14 nicht gezeigten Modellschneidrolle 20 zu erkennen. Eine Schneidrichtung, entlang welcher die Modellschneidrolle 20 auf der vertikalen, ebenen Außenfläche 75 des Gesteinsprobenkörpers 12 während des Modellschneidversuchs abrollt, ist in Fig. 14 mit Bezugszeichen 97 gekennzeichnet.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Modellieranordnung (50) zum Ermitteln von Modelldaten zum Modellieren des Vorgangs des Abbaus von Gebirge (102) mittels einer Realschneidrolle (106) an einem Bohrkopf (150) einer Tunnelbohrmaschine (180), wobei die Modellieranordnung (50) aufweist:
eine Modellschneidanordnung (10) zum Durchführen von Schneidversuchen mittels einer Modellschneidrolle (20), die gegenüber der Realschneidrolle (106) eine verringerte Dimension aufweist, an einem Gesteinsprobekörper (12), der insbesondere aus dem Gebirge (102) gewonnen ist, wobei die Modellschneidanordnung (10) aufweist:
eine insbesondere hydraulische Presse (14), die eine Montageplattform (16) und einen Kraftmesskopf (18) aufweist, die relativ zueinander bewegbar sind; die Modellschneidrolle (20), die zum Schneiden des Gesteinsprobekörpers (12) ausgebildet ist;
wobei der Kraftmesskopf (18) zum Montieren der Modellschneidrolle (20) und ferner derart ausgebildet ist, dass bei Schneiden des Gesteinsprobekörpers (12) mittels der montierten Modellschneidrolle (20) ein für die Schneidkraft indikativer Parameter erfassbar ist, **dadurch gekennzeichnet, dass** die Montageplattform (16) mit einem Aufnahmevolumen (30) zum immobilisierten Aufnehmen des Gesteinsprobekörpers (12) derart ausgebildet ist, dass im in dem Aufnahmevolumen (30) aufgenommenen Zustand des Gesteinsprobekörpers (12) der Gesteinsprobekörper (12) im Wesentlichen entlang seiner gesamten Vertikalerstreckung (H) passgenau in das Aufnahmevolumen (30) der Montageplattform (16) kontaktbehaftet eingepasst ist und dass die Modellieranordnung einen Prozessor (52) aufweist, der ausgebildet ist, basierend auf mittels der Modellschneidanordnung (10) erfassten, für die Schneidkraft indikativen Parametern sowie basierend auf geometrischen Eigenschaften der Modellschneidrolle (20) und der Realschneidrolle (106) die Modelldaten zu ermitteln.

2. Modellieranordnung (50) gemäß Anspruch 1, wobei die insbesondere hydraulische Presse (14) ausgebildet ist, dass der Kraftmesskopf (18) gegenüber einem Laborsystem in vertikaler Richtung, insbesondere mittels eines Hydraulikzylinders, bewegbar ist und die Montageplattform (16)gegenüber dem Laborsystem in vertikaler Richtung ortsfest ist.

3. Modellieranordnung (50) gemäß Anspruch 1 oder 2, wobei die insbesondere hydraulische Presse (14) ausgebildet ist, dass der Kraftmesskopf (18) in der horizontalen Ebene bei Einwirkung einer seitlichen Belastung zu einer Ausgleichsbewegung fähig ist.

4. Modellieranordnung (50) gemäß einem der Ansprüche 1 bis 3, wobei der Kraftmesskopf (18) ausgebildet ist, eine ausschließlich uniaxiale Kraftmessung, insbesondere ausschließlich in vertikaler Richtung, durchzuführen.

5. Modellieranordnung (50) gemäß einem der Ansprüche 1 bis 4, wobei der Kraftmesskopf (18) ausgebildet ist, ausschließlich eine auf die rotierfähig gelagerte Modellschneidrolle (20) einwirkende Rollkraft zu messen.

6. Modellieranordnung (50) gemäß einem der Ansprüche 1 bis 5, wobei die Modellschneidrolle (20) in einem Lagergehäuse (22) an dem Kraftmesskopf (18) rotierfähig gelagert ist und eine umlaufende Schneidkante (24) zum Schneiden des Gesteinsprobekörpers (12) aufweist,
wobei insbesondere die Modellschneidrolle (20) und das Lagergehäuse (22) eine von dem Kraftmesskopf (18) gemeinsam abnehmbare Einheit bilden.

7. Modellieranordnung (50) gemäß einem der Ansprüche 1 bis 6, aufweisend eine Linearführeinrichtung (26), welche den Kraftmesskopf (18) derart führt, dass dieser nur entlang genau einer mittels der Linearführeinrichtung vorgegebenen, insbesondere vertikalen, Linearachse beweglich ist.

8. Modellieranordnung (50) gemäß einem der Ansprüche 1 bis 7, aufweisend eine Eindringtiefeneinstelleinrichtung (28), die zum Einstellen einer Eindringtiefe der Modellschneidrolle (20) in den Gesteinsprobekörper (12) ausgebildet ist, wobei insbesondere die Eindringtiefeneinstelleinrichtung als Abstandshalter (28) zwischen der Montageplattform (16) und dem Kraftmesskopf (18) ausgebildet ist.

9. Modellieranordnung (50) gemäß einem der Ansprüche 1 bis 8, wobei die Montageplattform (16) derart ausgebildet ist, dass im in dem Aufnahmevolumen (30) aufgenommenen Zustand des Gesteinsprobekörpers (12) dessen oberseitige Probekörperoberfläche (71) mit einer daran direkt angeschlossenen oberseitigen Plattformoberfläche (73) der Montageplattform (16) unter Bildung einer gemeinsamen Oberfläche stetig abschließt und/oder dessen seitliche, aufnahmevolumenaußenseitige Probekörperoberfläche (75) mit einer daran direkt angeschlossenen seitlichen Plattformoberfläche (77) der Montageplattform (16) unter Bildung einer gemeinsamen Seitenfläche stetig abschließt.

10. Modellieranordnung (50) gemäß einem der Ansprüche 1 bis 9, wobei die Montageplattform (16) derart ausgebildet ist, dass im in dem Aufnahmevolumen (30) aufgenommenen Zustand des Gesteinsprobekörpers (12) dessen gesamte unterseitige Probekörperoberfläche (61) und/oder dessen gesamte seitliche, aufnahmevolumeninnenseitige Probekörperoberfläche (79) eine korrespondierenden Oberfläche (63, 81) der Montageplattform (16) direkt kontaktiert und an dieser immobilisiert ist.

11. Modellieranordnung (50) gemäß einem der Ansprüche 1 bis 10, aufweisend den Gesteinsprobekörper (12), der in dem Aufnahmevolumen (30) der Montageplattform (16) immobilisiert aufgenommen ist, so dass der Gesteinsprobekörper (12) im Wesentlichen entlang seiner gesamten Vertikalerstreckung (H) passgenau in das Aufnahmevolumen (30) der Montageplattform (16) kontaktbehaftet eingepasst ist.

12. Modellieranordnung (50) gemäß einem der Ansprüche 1 bis 11,
aufweisend eine Datenbank (54), in der Referenz-Datensätze (56) gespeichert sind, die eine Korrelation zwischen mittels der Modellschneidanordnung (10) an Referenz-Gesteinsprobekörpern (12) eines jeweiligen Referenz-Gebirges (102) gemessenen, für die jeweilige Schneidkraft indikativen Probereferenz-Parameter einerseits und für den zugehörigen Vortrieb der mit der jeweiligen Realschneidrolle (106) betriebenen Tunnelbohrmaschine (180) in dem jeweiligen Referenz-Gebirge (102) indikativen Gebirgsreferenz-Parameter andererseits enthalten;
wobei der Prozessor (52) ausgebildet ist, einen Vortrieb der mit der Realschneidrolle (106) betriebenen Tunnelbohrmaschine (180) beim Abbau des Gebirges (102) basierend auf dem mittels der Modellschneidanordnung (10) an dem Gesteinsprobekörper (12) erfassten, für die Schneidkraft indikativen Parameter sowie basierend auf den Referenz-Datensätzen (56) zu prognostizieren.

13. Verfahren zum Durchführen von Schneidversuchen an einem Gesteinsprobekörper (12) mittels einer insbesondere hydraulischen Presse (14) zum Ermitteln von Modelldaten zum Modellieren des Vorgangs des Abbaus von Gebirge (102) mittels einer Realschneidrolle (106) an einem Bohrkopf (150) einer Tunnelbohrmaschine (180), wobei das Verfahren aufweist:
Montieren einer Modellschneidrolle (20), die gegenüber der Realschneidrolle (106) eine verringerte Dimension aufweist und die zum Schneiden des Gesteinsprobekörpers (12) ausgebildet ist, an einem Kraftmesskopf (18) der insbesondere hydraulischen Presse (14);
immobilisiertes Aufnehmen des Gesteinsprobekörpers (12) in einem Aufnahmevolumen (30) einer Montageplattform (16) der insbesondere hydraulischen Presse (14) derart, dass der Gesteinsprobekörper (12) im Wesentlichen entlang seiner gesamten Vertikalerstreckung (H) passgenau in das Aufnahmevolumen (30) der Montageplattform (16) kontaktbehaftet eingepasst ist;
Bewegen der Montageplattform (16) und des Kraftmesskopfs (18) relativ zueinander, so dass der Gesteinsprobekörper (12) mittels der montierten Modellschneidrolle (20) geschnitten wird;
Messen eines für die Schneidkraft indikativen Parameters mittels des Kraftmesskopfs (18) beim Schneiden des Gesteinsprobekörpers (12) mittels der montierten Modellschneidrolle (20);
Ermitteln der Modelldaten basierend auf dem gemessenen Parameter sowie basierend auf geometrischen Eigenschaften der Modellschneidrolle (20) und der Realschneidrolle (106).

14. Verfahren gemäß Anspruch 13, wobei der Gesteinsprobekörper (12) aus einer Kernbohrung an dem Gebirge (102) erhalten wird,
wobei der Gesteinsprobekörper (12) als Halbkreiszylinder insbesondere aus dem Gebirge (102) erhalten wird, und/oder
wobei der Gesteinsprobekörper (12) in zumindest einer Dimension, insbesondere in allen Dimensionen, eine Ausdehnung in einem Bereich zwischen 5 cm und 20 cm aufweist, insbesondere in einem Bereich zwischen 7 cm und 13 cm, und/oder wobei der Gesteinsprobekörper (12) in dem Aufnahmevolumen der Montageplattform (16) einzementiert, insbesondere eingeklebt, wird.

## Claims

1. Modelling arrangement (50) for determining of model data for modelling the process of the extraction of mountains (102) by a real cutting roller (106) at a drilling head (150) of a tunnel drilling machine (180), wherein the modelling arrangement (50) comprises:
a model cutting arrangement (10) for performing cutting tests by a model cutting roller (20) comprising a reduced dimension compared to the real cutting roller (106), at a rock specimen (12) which is particularly gained from the mountain (102), wherein the model cutting arrangement (10) comprises:
a particularly hydraulic press (14) comprising a mounting platform (16) and a force measuring head (18), which are movable relatively to each other;
the model cutting roller (20) which is formed for cutting the rock specimen (12);
wherein the force measuring head (18) is formed for mounting the model cutting roller (20), and is further formed in such a way that during cutting the rock specimen (12) by the mounted model cutting roller (20), a parameter which is indicative for the cutting force, is determinable, **characterized in that** the mounting platform (16) with a receiving volume (30) for immobilized receiving of the rock specimen (12) is formed in such a way that, in the received in the receiving volume (30) state of the rock specimen (12), the rock specimen (12) is custom-fitted with contact in the receiving volume (30) of the mounting platform (16) substantially along its entire vertical extension (H), and **in that** the modelling arrangement comprises a processor (52) which is formed to determine the model data based on parameters being captured by the modelling arrangement (10), being indicative for the cutting force, as well as based on geometrical characteristics of the model cutting roller (20) and the real cutting roller (106).

2. Modelling arrangement (50) according to claim 1,
wherein the particularly hydraulic press (14) is formed that the force measuring head (18) is moveable in a vertical direction compared to a lab system, particularly by a hydraulic cylinder, and that the mounting platform (16) is stationary in the vertical direction compared to the lab system.

3. Modelling arrangement (50) according to claim 1 or 2,
wherein the particularly hydraulic press (14) is formed such that the force measuring head (18) is capable of a compensation movement in the horizontal plane under influence of a lateral load.

4. Modelling arrangement (50) according to one of the claims 1 to 3,
wherein the force measuring head (18) is formed to perform an exclusively unidirectional force measurement, particularly exclusively in a vertical direction.

5. Modelling arrangement (50) according to one of the claims 1 to 4,
wherein the force measuring head (18) is formed to exclusively measure a roll force acting on the model cutting roller (20) which is rotatingly seated.

6. Modelling arrangement (50) according to one of the claims 1 to 5,
wherein the model cutting roller (20) is rotatingly seated in a bearing housing (22) at the force measuring head (18), and comprises a circumferential cutting edge (24) for cutting the rock specimen (12),
wherein particularly the model cutting roller (20) and the bearing housing (22) form a unit being together demountable from the force cutting head (18).

7. Modelling arrangement (50) according to one of the claims 1 to 6, comprising
a linear guiding device (26) which guides the force measuring head (18) in such a way that it is solely moveable along exactly one, particularly vertical, linear axis, which is given by the linear guiding device.

8. Modelling arrangement (50) according to one of the claims 1 to 7, comprising
a penetration depth adjusting device (28) which is formed for adjusting a penetration depth of the model cutting roller (20) into the rock specimen (12), wherein particularly the penetration depth adjusting equipment is formed as a spacer (28) between the mounting platform (16) and the force measuring head (18).

9. Modelling arrangement (50) according to one of the claims 1 to 8,
wherein the mounting platform (16) is formed in such a way that, in the received in the receiving volume (30) state of the rock specimen (12), its upper specimen surface (71) is continuously flush with a directly connected upper platform surface (73) of the mounting platform (16), while forming a common surface, and/or
its lateral, receiving volume outer specimen surface (75) is continuously flush with a directly connected lateral platform surface (77) of the mounting platform (16), while forming a common lateral face.

10. Modelling arrangement (50) according to one of the claims 1 to 9,
Wherein the mounting platform (16) is formed in such a way that, in the received in the receiving volume (30) state of the rock specimen (12), its entire lower rock specimen surface (61), and/or its entire lateral, receiving volume inner specimen surface (79) directly contacts/contact a corresponding surface (63, 81) of the mounting platform (16) and is/are immobilized at this.

11. Modelling arrangement (50) according to one of the claims 1 to 10, comprising the rock specimen (12) which is received in an immobilized way, in the receiving volume (30) of the mounting platform (16), such that the rock specimen (12) is custom-fitted with contact in the receiving volume (30) of the mounting platform (16) substantially along its entire vertical extension (H).

12. Modelling arrangement (50) according to one of the claims 1 to 11, comprising
a database (54) in which reference data sets (56) are stored, which contain a correlation between probe reference parameter which is measured by the model cutting arrangement (10) at reference rock specimen (12) of a respective reference mountain (102), which is indicative for the respective cutting force on the one hand, and mountain reference parameter which is indicative for the corresponding advancing of the tunnel drilling machine (180) driven by the respective real cutting roller (106) in the respective reference mountain (102) on the other hand;
wherein the processor (52) is formed to predict an advancing of the tunnel drilling machine (180) driven by the real cutting roller (106), during an extraction of the mountain (102), based on the parameter captured by the model cutting arrangement (10) at the rock specimen (12), being indicative for the cutting force, as well as based on the reference data sets (56).

13. Method for performing cutting tests at a rock specimen (12) by a particularly hydraulic press (14) for determining of model data for modelling the process of the extraction of mountain (102) by a real cutting roller (106) at an drilling head (150) of a tunnel drilling machine (180), wherein the method comprises:
mounting a model cutting roller (20) comprising a reduced dimension compared to the real cutting roller (106), and being formed for cutting the rock specimen (12), to a force measuring head (18) of the particularly hydraulic press (14);
immobilized receiving of the rock specimen (12) in a receiving volume (30) of a mounting platform (16) of the particularly hydraulic press (14) in such a way that the rock specimen (12) is custom-fitted with contact in the receiving volume (30) of the mounting platform (16) substantially along its entire vertical extension (H);
moving the mounting platform (16) and the force measuring head (18) relatively to each other, such that the rock specimen (12) is cut by the mounted model cutting roller (20);
measuring a parameter being indicative for the cutting force, by the force measuring head (18) during the cutting of the rock specimen (12) by the mounted model cutting roller (20);
determining the model data based on the measured parameter, as well as based on the geometric characteristics of the model cutting roller (20) and the real cutting roller (106).

14. Method according to claim 13,
wherein the rock specimen (12) is obtained from a core drilling at the mountain (102),
wherein the rock specimen (12) is obtained as a semi-circle cylinder particularly from the mountain (102), and/or
wherein the rock specimen (12) comprises at least in one dimension, particularly in all dimensions, an extension in a range between 5 cm and 20 cm, particularly in a range between 7 cm and 13 cm, and/or
wherein the rock specimen (12) is cemented into, particularly glued in, the receiving volume of the mounting platform (16).

## Revendications

1. Agencement de modélisation (50) pour la détermination de données type pour la modélisation de l'opération d'extraction de montagne (102) au moyen d'une molette de coupe réelle (106) au niveau d'une tête de forage (150) d'un tunnelier (180), dans lequel l'agencement de modélisation (50) présente :
un agencement type de découpe (10) pour la réalisation d'essais de découpe au moyen d'une molette de coupe type (20), qui présente par rapport à la molette de coupe réelle (106) une dimension réduite, au niveau d'un corps d'échantillon de roche (12), qui est extrait en particulier de la montagne (102), dans lequel l'agencement type de découpe (10) présente :
une presse en particulier hydraulique (14), qui présente une plate-forme de montage (16) et une tête dynamométrique (18), qui sont mobiles l'une par rapport à l'autre ;
la molette de coupe type (20), qui est réalisée pour la découpe du corps d'échantillon de roche (12) ;
dans lequel la tête dynamométrique (18) est réalisée pour le montage de la molette de coupe type (20) et en outre de telle manière que lors de la découpe du corps d'échantillon de roche (12) au moyen de la molette de coupe type (20) montée, un paramètre indiquant la force de coupe peut être saisi, **caractérisé en ce que** la plate-forme de montage (16) est réalisée avec un volume de réception (30) pour la réception immobilisée du corps d'échantillon de roche (12) de telle manière qu'à l'état reçu dans le volume de réception (30) du corps d'échantillon de roche (12), le corps d'échantillon de roche (12) est parfaitement encastré avec contact dans le volume de réception (30) de la plate-forme de montage (16) sensiblement le long de toute son extension verticale (H) et **en ce que** l'agencement de modélisation présente un processeur (52), qui est réalisé pour déterminer les données types sur la base de paramètres indiquant la force de coupe, saisis au moyen de l'agencement de coupe type (10) ainsi que sur la base de propriétés géométriques de la molette de coupe type (20) et de la molette de coupe réelle (106).

2. Agencement de modélisation (50) selon la revendication 1, **caractérisé en ce que** la presse en particulier hydraulique (14) est réalisée de sorte que la tête dynamométrique (18) est mobile dans la direction verticale par rapport à un système de laboratoire, en particulier au moyen d'un vérin hydraulique, et la plate-forme de montage (16) est stationnaire dans la direction verticale par rapport au système de laboratoire.

3. Agencement de modélisation (50) selon la revendication 1 ou 2, **caractérisé en ce que** la presse en particulier hydraulique (14) est réalisée de sorte que la tête dynamométrique (18) est en mesure d'effectuer un mouvement de compensation dans le plan horizontal sous l'action d'une sollicitation latérale.

4. Agencement de modélisation (50) selon l'une quelconque des revendications 1 à 3, **caractérisé en ce que** la tête dynamométrique (18) est réalisée pour effectuer une mesure de force exclusivement uniaxiale, en particulier exclusivement dans la direction verticale.

5. Agencement de modélisation (50) selon l'une quelconque des revendications 1 à 4, **caractérisé en ce que** la tête dynamométrique (18) est réalisée pour mesurer exclusivement une force de roulement agissant sur la molette de coupe type (20) logée de manière rotative.

6. Agencement de modélisation (50) selon l'une quelconque des revendications 1 à 5, **caractérisé en ce que** la molette de coupe type (20) est logée de manière rotative dans un boîtier de roulement (22) au niveau de la tête dynamométrique (18) et présente une arête de coupe périphérique (24) pour la découpe du corps d'échantillon de roche (12),
dans lequel en particulier la molette de coupe type (20) et le boîtier de roulement (22) forment une unité conjointement amovible de la tête dynamométrique (18).

7. Agencement de modélisation (50) selon l'une quelconque des revendications 1 à 6, présentant un dispositif de guidage linéaire (26), lequel guide la tête dynamométrique (18) de telle manière que celle-ci est seulement mobile exactement le long d'un axe linéaire prédéfini au moyen du dispositif de guidage linéaire, en particulier vertical.

8. Agencement de modélisation (50) selon l'une quelconque des revendications 1 à 7, présentant un dispositif de réglage de profondeur de pénétration (28), qui est réalisé pour le réglage d'une profondeur de pénétration de la molette de coupe type (20) dans le corps d'échantillon de roche (12), **caractérisé en ce qu'**en particulier le dispositif de réglage de profondeur de pénétration est réalisé en tant qu'écarteur (28) entre la plate-forme de montage (16) et la tête dynamométrique (18).

9. Agencement de modélisation (50) selon l'une quelconque des revendications 1 à 8, **caractérisé en ce que** la plate-forme de montage (16) est réalisée de telle manière qu'à l'état reçu dans le volume de réception (30) du corps d'échantillon de roche (12), sa surface de corps d'échantillon supérieure (71) termine en continu avec une surface de plate-forme supérieure (73) qui y est directement raccordée de la plate-forme de montage (16) en formant une surface supérieure commune et/ou sa surface de corps d'échantillon latérale, extérieure au volume de réception (75) termine en continu avec une surface de plate-forme latérale (77) qui y est directement raccordée de la plate-forme de montage (16) en formant une surface latérale commune.

10. Agencement de modélisation (50) selon l'une quelconque des revendications 1 à 9, **caractérisé en ce que** la plate-forme de montage (16) est réalisée de telle manière qu'à l'état reçu dans le volume de réception (30) du corps d'échantillon de roche (12), l'ensemble de sa surface de corps d'échantillon inférieure (61) et/ou l'ensemble de sa surface de corps d'échantillon latérale, intérieure au volume de réception (79) touche directement une surface correspondante (63, 81) de la plate-forme de montage (16) et est immobilisée au niveau de celle-ci.

11. Agencement de modélisation (50) selon l'une quelconque des revendications 1 à 10, présentant le corps d'échantillon de roche (12), qui est reçu immobilisé dans le volume de réception (30) de la plate-forme de montage (16), de sorte que le corps d'échantillon de roche (12) soit parfaitement encastré avec contact dans le volume de réception (30) de la plate-forme de montage (16) sensiblement le long de toute son extension verticale (H).

12. Agencement de modélisation (50) selon l'une quelconque des revendications 1 à 11,
présentant une base de données (54), dans laquelle des jeux de données de référence (56) sont enregistrés, qui comportent une corrélation entre des paramètres de référence d'échantillon indiquant la force de coupe respective, mesurés au moyen de l'agencement type de découpe (10) au niveau de corps d'échantillon de roche de référence (12) d'un montage de référence respective (102) d'une part et des paramètres de référence de montagne indiquant l'avancement afférent du tunnelier (180) exploité avec la molette de coupe réelle (106) respective dans la montagne de référence (102) d'autre part ;
**caractérisé en ce que** le processeur (52) est réalisé pour pronostiquer un avancement du tunnelier (180) exploité avec la molette de coupe réelle (106) lors de l'extraction de la montagne (102) sur la base du paramètre indiquant la force de coupe, saisi au moyen de l'agencement type de découpe (10) au niveau du corps d'échantillon de roche (12) ainsi que sur la base des jeux de données de référence (56).

13. Procédé de réalisation d'essais de découpe sur un corps d'échantillon de roche (12) au moyen d'une presse en particulier hydraulique (14) pour la détermination de données type pour la modélisation de l'opération d'extraction de montagne (102) au moyen d'une molette de coupe réelle (106) au niveau d'une tête de forage (150) d'un tunnelier (180), **caractérisé en ce que** le procédé présente :
le montage d'une molette de coupe type (20), qui présente par rapport à la molette de coupe réelle (106) une dimension réduite, et qui est réalisée pour la coupe du corps d'échantillon de roche (12), au niveau d'une tête dynamométrique (18) de la presse en particulier hydraulique (14) ;
la réception immobilisée du corps d'échantillon de roche (12) dans un volume de réception (30) d'une plate-forme de montage (16) de la presse en particulier hydraulique (14) de telle manière que le corps d'échantillon de roche (12) est parfaitement encastré avec contact dans le volume de réception (30) de la plate-forme de montage (16) sensiblement le long de toute son extension verticale (H) ;
le déplacement de la plate-forme de montage (16) et de la tête dynamométrique (18) l'une par rapport à l'autre, de sorte que le corps d'échantillon de roche (12) soit découpé au moyen de la molette de coupe type (20) montée ;
la mesure d'un paramètre indiquant la force de coupe au moyen de la tête dynamométrique (18) lors de la découpe du corps d'échantillon de roche (12) au moyen de la molette de coupe type (20) montée ;
la détermination de données types sur la base du paramètre mesuré ainsi que sur la base de propriétés géométriques de la molette de coupe type (20) et de la molette de coupe réelle (106).

14. Procédé selon la revendication 13, **caractérisé en ce que** le corps d'échantillon de roche (12) est obtenu à partir d'un carottage de la montagne (102),
dans lequel le corps d'échantillon de roche (12) est obtenu sous forme de cylindre semi-circulaire en particulier de la montagne (102), et/ou
dans lequel le corps d'échantillon de roche (12) présente dans au moins une dimension, en particulier dans toutes les dimensions, une expansion comprise entre 5 cm et 20 cm, en particulier comprise entre 7 cm et 13 cm, et/ou
dans lequel le corps d'échantillon de roche (12) est cimenté dans le volume de réception de la plate-forme de montage (16), en particulier collé.
